(19) Europäisches Patentamt
European Patent Office
Office européen des brevets

(11) **EP 3 852 209 B1**

(12) **EUROPEAN PATENT SPECIFICATION**

(45) Date of publication and mention
of the grant of the patent:
**14.01.2026   Bulletin 2026/03**

(21) Application number: **19859016.8**

(22) Date of filing: **13.09.2019**

(51) International Patent Classification (IPC):
*H01S 3/08* (2023.01)        *H01S 3/113* (2006.01)
*H01S 3/00* (2006.01)        *H01S 3/06* (2006.01)
*H01S 3/094* (2006.01)        *H01S 3/0941* (2006.01)
*H01S 3/10* (2006.01)        *H01S 3/16* (2006.01)
*H01S 3/23* (2006.01)

(52) Cooperative Patent Classification (CPC):
**H01S 3/08081; H01S 3/08059; H01S 3/113;**
H01S 3/005; H01S 3/0608; H01S 3/061;
H01S 3/0621; H01S 3/0627; H01S 3/094053;
H01S 3/09415; H01S 3/10092; H01S 3/1643;
H01S 3/2308; H01S 2301/203

(86) International application number:
**PCT/JP2019/036231**

(87) International publication number:
**WO 2020/054869 (19.03.2020 Gazette 2020/12)**

(54) **OPTICAL OSCILLATOR**

   OPTISCHER OSZILLATOR

   OSCILLATEUR OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **14.09.2018   JP 2018173008**

(43) Date of publication of application:
**21.07.2021   Bulletin 2021/29**

(73) Proprietor: **Inter-University Research Institute
Corporation
National Institutes of Natural Sciences
Tokyo 181-8588 (JP)**

(72) Inventors:
• **TAIRA, Takunori
Okazaki-shi, Aichi 444-8585 (JP)**
• **LIM, Hwan Hong
Okazaki-shi, Aichi 444-8585 (JP)**

(74) Representative: **Ribeiro, James Michael
Withers & Rogers LLP
2 London Bridge
London SE1 9RA (GB)**

(56) References cited:
| | |
|---|---|
| JP-A- 2008 112 948 | JP-A- 2013 093 603 |
| JP-A- 2014 192 166 | JP-A- 2014 192 166 |
| JP-A- 2017 123 429 | JP-A- H 022 188 |
| JP-A- H0 856 027 | JP-A- H09 214 023 |
| JP-A- H11 261 136 | US-A- 4 903 271 |
| US-A1- 2015 280 392 | US-A1- 2016 326 667 |

**EP 3 852 209 B1**

## Description

## Technical Field

The present invention relates to an optical oscillator.

## Background Art

High-power laser light is required for laser ignition, laser processing, or the like. Examples of an optical oscillator that generates high-power laser light include the technology described in Non-Patent Literatures 1 to 3. Optical oscillators described in Non-Patent Literatures 1 to 3 are passive Q-switched microchip lasers including a pair of planar mirrors constituting a resonator, a ceramic laser medium disposed between the pair of planar mirrors, and a ceramic Q-switched element.

## Citation List

## Patent Literature

[Non-Patent Literature 1] Takunori Taira, "High Power Laser Material with Micro Domain Control," Applied Physics, 2016, Vol. 85, No. 10, p. 863-869
[Non-Patent Literature 2] Masaki Tsunekann, et. al., "High Peak Power, Passively Q-switched Microlaser for Ignition Engins," IEEE JOURNAL OF QUANTUM ELCTRONICS, February 2010, VOL. 46, NO. 2, p. 277-284
[Non-Patent Literature 3] Masaki Tsunekann, et. al., "High Peak Power, Passively Q-switched Yb:YAG/-Cr:YAG Micro-Lasers," IEEE JOURNAL OF QUANTUM ELCTRONICS, May 2013, VOL. 49, NO .5, p. 454-461

US 4 903 271 A describes a laser apparatus having a phase regulator for regulating phase of output laser beam, in which a full reflection portion of an output mirror is made partially reflective and a relative optical length thereof to a non-reflection portion of the output mirror is regulated by a relative thickness thereof.

JP 2014 192166 A describes providing a semiconductor laser excitation solid-state laser device radiating pulse laser light over all the range of ambient temperatures of 20 to 80°C.

US 2016/326667 A1 describes heterogeneous monolithic crystals which can include multiple regimes in a complex geometry and can be advantageously utilized in laser applications.

## Summary of Invention

## Technical Problem

An output power of a Q-switched laser is proportional to an area of a laser mode. However, when a planar mirror is used for a resonator as in the optical oscillators described in Non-Patent Literatures 1 to 3, a laser mode radius is automatically reduced due to a thermal lens effect caused by heat generation according to excitation. On the other hand, it is conceivable to expand an excitation area as described in Non-Patent Literature 1 in order to increase the output power, but a basic mode cannot be increased and thus, when the excitation area is expanded, oscillation in a higher-order mode starts and beam quality ($M^2$) deteriorates sharply. Here, although a case in which the optical oscillator is a Q-switched laser has been described, the same applies to an optical oscillator based on a nonlinear optical gain such as an optical parametric oscillator (OPO).
Therefore, an object of the present invention is to provide an optical oscillator capable of realizing high output power while suppressing deterioration of beam quality.

## Solution to Problem

An optical oscillator according to an aspect of the present invention (hereinafter referred to as a "first optical oscillator") includes the features defined by claim 1.
The present invention relates to an optical oscillator (hereinafter also referred to as a "second optical oscillator") including the features defined by claim 2.
The first optical oscillator and the second optical oscillator are end surface excitation type optical oscillators in which excitation light is incident from the first reflecting portion. Since the first optical oscillator and the second optical oscillator include the saturable absorption portion, the first optical oscillator and the second optical oscillator can output pulsed light. The first reflecting portion and the second reflecting portion form an unstable resonator, and the second reflecting portion is smaller than the first reflecting portion when viewed in the one direction and is curved toward the first reflecting portion. Since the second reflecting portion is curved toward the first reflecting portion, the light having the second wavelength reflected by the second reflecting portion diverges. Therefore, light having the second wavelength passes through a wider region of the laser medium as compared with a case in which both the first reflecting portion and the second reflecting portion are planar mirrors. As a result, it is easy for a large amount of stimulated emission to occur from the laser medium, and thus pulsed light having a higher output power as compared with the case in which both the first reflecting portion and the second reflecting portion are planar mirrors can be obtained when an excitation area is the same. In this case, it is possible to achieve improvement of output power of the pulsed light while suppressing dete-

rioration of beam quality ($M^2$).

In an embodiment of the second optical oscillator, an example of a support includes a plano-convex lens. In this case, for example, it is possible to collimate or condense the pulsed light using the support that is a plano-convex lens.

A size of the saturable absorption portion may be smaller than a size of the laser medium when viewed in the one direction.

A laser medium configured to emit light having the second wavelength due to incidence of light having the first wavelength may be provided around the saturable absorption portion when viewed in the one direction. In this case, the pulsed light can be further amplified by the laser medium provided around the saturable absorption portion. As a result, a high output power of the pulsed light can be further achieved.

The first reflecting portion may be a planar mirror. In this case, it is easy to form the first reflecting portion. For example, when the first reflecting portion is provided on an end surface of the laser medium, processing of the laser medium is easy since the end surface of the laser medium may also be a flat surface.

The first reflecting portion may be curved on the side opposite to the laser medium. In this case, divergence of light having the second wavelength reflected by the second reflecting portion and propagating to the first reflecting portion side is suppressed when the light is reflected by the first reflecting portion. Therefore, an effect of confining light having the second wavelength between the first reflecting portion and the second reflecting portion can be improved.

An opening for passing laser light having the second wavelength may be formed in at least a part of a region of the first reflecting portion overlapping the second reflecting portion when viewed in the one direction. In this case, the laser light having the second wavelength for injection synchronization can be incident on the laser medium using the opening. As a result, jitter of the first optical oscillator and the second optical oscillator can be controlled.

The laser medium may be made of a ceramic, the saturable absorption portion may contain a ceramic saturable absorption body, the laser medium and the saturable absorption portion may be bonded to each other, and the first reflecting portion may be provided in the laser medium. However, none of these is limited to ceramics.

## Advantageous Effects of Invention

According to the present invention, it is possible to provide an optical oscillator capable of realizing high output power while suppressing deterioration of beam quality.

## Brief Description of Drawings

FIG. 1 is a diagram illustrating a schematic configuration of a laser device (optical oscillator) according to a first embodiment.
FIG. 2 is a schematic diagram illustrating an example of pulsed laser light output from the laser device illustrated in FIG. 1.
FIG. 3 is a diagram illustrating a schematic configuration of a first modification example of the laser device illustrated in FIG. 1.
FIG. 4 is a diagram illustrating a schematic configuration of a second modification example of the laser device illustrated in FIG. 1.
FIG. 5 is a diagram illustrating a schematic configuration of a third modification example of the laser device illustrated in FIG. 1.
FIG. 6 is a diagram illustrating a schematic configuration of a fourth modification example of the laser device illustrated in FIG. 1.
FIG. 7 is a diagram illustrating a schematic configuration of a laser device according to a second embodiment.
FIG. 8 is a diagram illustrating a schematic configuration of a laser device according to experimental example 1.
FIG. 9 is a diagram illustrating an image of pulsed laser light obtained in experimental example 1.
FIG. 10 is a diagram illustrating a measurement result of a pulse width of pulsed laser light from the laser device used in experimental example 1.
FIG. 11 is a diagram illustrating an experimental result for confirming beam quality of the pulsed laser light from the laser device used in experimental example 1.
FIG. 12 is a diagram illustrating an experimental result for confirming a polarized state of the pulsed laser light from the laser device used in experimental example 1.
FIG. 13 is a diagram illustrating an experimental result for confirming output power stability of the pulsed laser light from the laser device used in experimental example 1.
FIG. 14 is a schematic diagram illustrating an example of excitation light.
FIG. 15 is a schematic diagram illustrating another example of the excitation light.
FIG. 16 is a diagram illustrating a schematic configuration of a laser device according to experimental example 2.
FIG. 17 is a diagram illustrating an image of pulsed laser light obtained in example 2.
FIG. 18 is a diagram illustrating a measurement result of a pulse width of pulsed laser light from the laser device used in experimental example 2.
FIG. 19 is a diagram illustrating an experimental result for confirming output power stability of the pulsed laser light from the laser device used in experimental example 2.

FIG. 20 is a diagram illustrating an experimental result for confirming a polarized state of the pulsed laser light from the laser device used in experimental example 2.

FIG. 21 is a diagram illustrating an experimental result for confirming beam quality of the pulsed laser light from the laser device used in experimental example 2.

FIG. 22 is a diagram illustrating a result of measuring a beam pattern of pulsed laser light output from the laser device illustrated in FIG. 16 and a comparative laser device when sizes of excitation light are different.

FIG. 23 is a measurement result of a pulse width of pulsed laser light having each beam pattern illustrated in FIG. 22.

FIG. 24 is a drawing in which a pulse width calculated from the result illustrated in FIG. 23 is plotted.

FIG. 25 is a diagram illustrating a result of measuring peak power.

FIG. 26 is a diagram illustrating $M^2$ obtained in experimental example 2a.

FIG. 27 is a diagram illustrating brightness obtained from the result of experimental example 2a.

FIG. 28 is a diagram illustrating a result of measuring beam patterns on a focusing lens of a donut beam and a near-Gaussian beam in experimental example 2b.

FIG. 29 is a diagram illustrating pulse waveforms of the donut beam and the near-Gaussian beam in experimental example 2b.

FIG. 30 is a diagram illustrating a result of measuring a threshold energy $E_{th}$ of a breakdown.

FIG. 31 illustrates a beam pattern of a donut beam at a focal position measured for calculation of $M^2$.

FIG. 32 is a diagram illustrating an intensity distribution in a cross-sectional direction of the donut beam illustrated in FIG. 31.

## Description of Embodiments

Hereinafter, embodiments of the present invention will be described in detail with reference to the accompanying drawings. In the description of the drawings, the same or equivalent elements are denoted by the same reference signs, and duplicate description thereof is omitted. Dimensional ratios in the drawings do not always match those described.

(First embodiment)

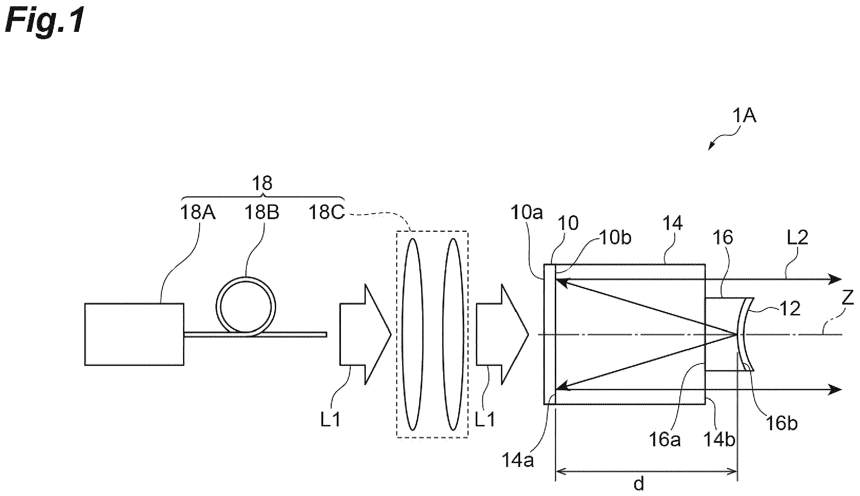

As illustrated in FIG. 1, a laser device (an optical oscillator) 1A according to a first embodiment includes a first reflecting portion 10, a second reflecting portion 12, a laser medium 14, and a Q-switched element (a saturable absorption portion) 16. The first reflecting portion 10, the second reflecting portion 12, the laser medium 14, and the Q-switched element 16 are disposed in order of the first reflecting portion 10, the laser medium 14, the Q-switched element 16, and the second reflecting portion 12 along a Z-axis. The Z-axis corresponds to an optical axis of the laser device 1A. The laser device 1A is suitably used for various laser processes for laser ignition, laser-induced breakdown spectroscopy, and ablation.

In the laser device 1A, excitation light L1 having a first wavelength (for example, a wavelength of 808 nm or 885 nm when the laser medium 14 is Nd:YAG, and a wavelength of 940 nm or 968 nm when the laser medium 14 is Yb:YAG) supplied from an excitation light supply unit 18 is incident on the first reflecting portion 10, and thus pulsed laser light L2 having a second wavelength (for example, a wavelength of 1064 nm when the laser medium 14 is Nd:YAG, and a wavelength of 1030 nm when the laser medium 14 is Yb: YAG) is output from the second reflecting portion 12 side (right side in FIG. 1).

It is enough that the excitation light supply unit 18 has a configuration capable of supplying the excitation light L1 to the first reflecting portion 10. The excitation light supply unit 18 includes, for example, a laser diode (LD) 18A that is coupled to an optical fiber 18B and outputs the excitation light L1, and an incidence optical system 18C for causing the excitation light L1 output from the optical fiber 18B to be incident on the first reflecting portion 10. The LD 18A may perform continuous wave oscillation or may perform quasi-continuous wave oscillation. The incidence optical system 18C of FIG. 1 condenses the excitation light L1 output from the optical fiber 18B and causes the excitation light L1 to be incident on the first reflecting portion 10. The excitation light L1 may be incident on the first reflecting portion 10 as parallel light or loosely condensed light substantially close to the parallel light, for example. The excitation light supply unit 18 may also be a part of the laser device 1A.

[First reflecting portion]

The first reflecting portion 10 is provided on a first end surface 14a of the laser medium 14. The first reflecting portion 10 is a dielectric multilayer film that transmits the excitation light L1 having the first wavelength and reflects the light having the second wavelength. A transmittance of the first reflecting portion 10 with respect to the excitation light L1 having the first wavelength is 80% or more (preferably, 95% or more), and a reflectance of the first reflecting portion 10 with respect to the light having the second wavelength is 90% or more (preferably, 99% or more). The first reflecting portion 10 is, for example, a dielectric multilayer film that functions as an AR coat for the excitation light L1 having the first wavelength and as an HR coat for the light having the second wavelength. The first reflecting portion 10 can be formed on the first end surface 14a using a thin film forming technique.

The first reflecting portion 10 includes a first surface (an incidence surface) 10a on which the excitation light L1 is incident, and a second surface 10b (a surface opposite to the first surface 10a in a direction of the Z-axis through which light propagates). The first surface 10a and the second surface 10b are flat surfaces orthogonal to the Z-axis. Therefore, the first reflecting portion 10 is a planar mirror having the transmission characteristics and reflection characteristics described above. However, the first reflecting portion 10 may be a mirror having a curvature (curved mirror) and may be, for example, a concave mirror.

The second reflecting portion 12 is disposed apart from the first reflecting portion 10 in the direction (one direction) of the Z-axis. The second reflecting portion 12 is provided on a second end surface 16b of the Q-switched element 16. The second reflecting portion 12 is a dielectric multilayer film that reflects the light having the second wavelength. A reflectance of the second reflecting portion 12 with respect to the light having the second wavelength is 80% or more (preferably 99% or more). The second reflecting portion 12 is, for example, a dielectric multilayer film that functions as an HR coat with respect to the light having the second wavelength. The second reflecting portion 12 can be formed on the second end surface 16b using a thin film forming technique.

The second reflecting portion 12 forms an unstable resonator together with the first reflecting portion 10. In the embodiment illustrated in FIG. 1, an optical axis of the unstable resonator formed by the first reflecting portion 10 and the second reflecting portion 12 matches the Z-axis. When viewed from the direction of the Z-axis, a size of the second reflecting portion 12 is smaller than a size of the first reflecting portion 10. Further, the second reflecting portion 12 is curved toward the first reflecting portion 10. Since the second reflecting portion 12 is curved as described above, the second reflecting portion 12 causes the light having the second wavelength to diverge. Therefore, the first reflecting portion 10 and the second reflecting portion 12 form a magnifying optical system.

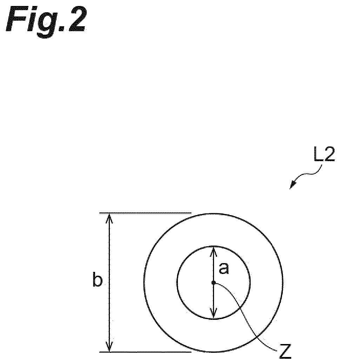

Since the first reflecting portion 10 and the second reflecting portion 12 are the unstable resonators as described above, a donut-shaped (donut mode) pulsed laser light L2 is output from the laser device 1A, as illustrated in FIG. 2. When an inner diameter of the pulsed laser light L2 is a, an outer diameter of the pulsed laser light L2 is b, and a magnification m is defined as b/a, the magnification m is, for example, $2^{1/2}$ or more and 3 or less. The magnification m may be 1.2 or more and 3 or less.

An example of a distance (hereinafter also referred to as a "resonator length d") between a portion of the second reflecting portion 12 (an apex of the second reflecting portion 12) closest to the first reflecting portion 10 and the second surface 10b of the first reflecting portion 10 is about 4 to 50 mm. The resonator length d may be smaller than 15 mm. The second reflecting portion 12 is a circle or polygon, and an example of a diameter or diagonal length thereof is 1 to 20 mm when viewed from the direction of the Z-axis. A diameter or diagonal length of the second reflecting portion 12 may be 1 mm to 3 mm. An example of the radius of curvature of the second reflecting portion 12 is 10 mm to 2 m. An example of the radius of curvature of the second reflecting portion 12 may be 10 mm to 100 mm.

[Laser medium]

The laser medium 14 is a substance that forms an inversion distribution in which amplification exceeds absorption in an excited state and amplifies light using stimulated emission. The laser medium 14 is also referred to as a gain medium. For the laser medium 14, any of various known laser media can be used as long as the laser medium can output the light having the second wavelength when the excitation light L1 having the first wavelength is supplied to the laser medium.

Examples of a material of the laser medium 14 include a light gain material formed from an oxide to which rare earth ions serving as a light emitting center are added, a light gain material formed from an oxide to which transition metal ions serving as a light emitting center are added, and a light gain material formed from an oxide serving as a color center.

Examples of the rare earth ions include Ce, Pr, Nd, Pm, Sm, Eu, Gd, Tb, Dy, Ho, Er, Tm, and Yb. Examples of the transition metal ions include Ti, V, Cr, Mn, Fe, Co, Ni, and Cu. Examples of a base material include a garnet type such as YAG, YSAG, YGAG, YSGG, GGG, GSGG, or LuAG, a fluorine type such as YLF, LiSAF, LiCAF, $MgF_2$, or $CaF_2$, a vanadate type such as $YVO_4$, $GdVO_4$ and $LuVO_4$, an apatite type such as FAP, sFAP, VAP, or sVAP, an alumina type such as $Al_2O_3$, or $BeAl_2O_3$, a di-trioxide type such as $Y_2O_3$, $Sc_2O_3$, or $Lu_2O_3$, and a tungstate type such as KGW or KYW. The base material is a single crystal or polycrystalline ceramic material.

Examples of a shape of the laser medium 14 include a plate shape and a columnar shape. In the embodiment illustrated in FIG. 1, a central axis of the laser medium 14 matches the Z-axis. The laser medium 14 includes the first end surface 14a, and a second end surface 14b (a surface opposite to the first end surface 14a in the direction of the Z-axis). The first end surface 14a and the second end surface 14b are orthogonal to the Z-axis. An example of a length of the laser medium 14 along the direction of the Z-axis is 0.2 to 26 mm.

Examples of a shape of the laser medium 14 viewed from the Z-axis (a plan view shape) include a circle, a rectangle, a square, and a polygon. When the plan view shape of the laser medium 14 is the circle, an example of the diameter is 1.4 to 100 mm. When the plan view shape of the laser medium 14 is the rectangle or the square, an example of an approximate diagonal length is 1.9 to 140 mm.

Hereinafter, a shape of an element when the element is viewed from the Z-axis is also referred to as a "plan view shape" as described above.

The Q-switched element 16 is a saturable absorption body having a characteristic that an absorption capacity is saturated when an intensity of light incident on the Q-switched element 16 increases. A transmittance of the Q-switched element 16 increases with the absorption of the light having the second wavelength. The Q-switched element 16 is disposed coaxially with the laser medium 14. The Q-switched element 16 may be bonded to the second end surface 14b.

When viewed from the direction of the Z-axis, a size of the Q-switched element 16 is smaller than that of the laser medium 14. Examples of a shape of the Q-switched element 16 include a plate shape and a columnar shape. The Q-switched element 16 includes a first end surface 16a on the laser medium 14 side and a second end surface 16b (a surface opposite to the first end surface 16a in the direction of the Z-axis). The first end surface 16a is orthogonal to the Z-axis.

The second reflecting portion 12 is provided on the second end surface 16b. Since the second reflecting portion 12 is curved toward the first reflecting portion 10, the second end surface 16b is also similarly curved. A radius of curvature of the second end surface 16b is the same as a radius of curvature of the second reflecting portion 12.

An example of a length of the Q-switched element 16 along the direction of the Z-axis is 0.1 to 10 mm.

When the second reflecting portion 12 is provided on an entire surface of the second end surface 16b as in the laser device 1A, an example of a plan view shape of the Q-switched element 16 is a circle or a polygon, and an example of an equivalent diameter thereof is 1 to 20 mm.

The second reflecting portion 12 may be provided in a part of the second end surface 16b. That is, the second end surface 16b may be partially coated with the second reflecting portion 12. In this case, the second end surface 16b has a curved region curved toward the first reflecting portion 10 in a part thereof, and the second reflecting portion 12 is provided in the curved region. In the embodiment in which the second reflecting portion 12 is provided on a part of the second end surface 16b, an example of a plan view shape of the Q-switched element 16 may be a circle, a rectangle, a square, or a polygon. When the plan view shape of the Q-switched element 16 is rectangle or square, an example of an equivalent diagonal length is 1 to 20 mm.

A material of the Q-switched element 16 is a material of a saturable absorption body having a characteristic that an absorption capacity is saturated when an intensity of the incident light having the second wavelength increases. In the present embodiment, the material of the Q-switched element 16 is Cr:YAG ceramic, but may be a single crystal.

The Q-switched element 16 may be manufactured in a state such that an entire surface or part of the second end surface 16b is curved. Alternatively, the Q-switched element 16 may be manufactured such that the second end surface 16b is flat, and then processed so that the entire surface or part thereof is curved.

When both the laser medium 14 and the Q-switched element 16 are made of ceramic, sintering bonding is usually performed, but excitation light cannot be reflected. Therefore, for example, the laser medium 14 and the Q-switched element 16 may be subjected to surface-activated bonding. The surface-activated bonding is a scheme for removing an oxide film or a surface attachment on bonding surfaces of materials to be bonded in vacuum through ion beam irradiation or fast atom beam (FAB) irradiation and bonding the bonding surfaces that are flat and from which constituent atoms have been exposed. The bonding is a direct bonding using an intermolecular bond. In the case of surface-activated bonding, the laser medium is not limited to ceramics, and not only single crystals or hybrids thereof can be used, but also bonding can be performed after an excitation light reflection coating or the like is performed. When a bonded body is formed by the laser medium 14 and the Q-switched element 16 being bonded, a length of the laser medium 14 and the Q-switched element 16 in the bonded body in a bonding direction (corresponding to the length in the direction of the Z-axis) is, for example, smaller than 10 mm.

A coating layer that adjusts reflection characteristics (for example, reflection characteristics with respect to the light having the second wavelength) in the second end surface 14b and the first end surface 16a may be provided on at least one of the second end surface 14b of the laser medium 14 and the first end surface 16a of the Q-switched element 16. When such a coating layer is provided on the at least one of the second end surface 14b and the first end surface 16a, for example, the laser medium 14 and the Q-switched element 16 can be bonded as described above via the coating layer. A coating layer that functions as an HR coat with respect to the excitation light L1 having the first wavelength and as an AR coat with respect to the light having the second wavelength may be provided on at least one of the first end surface 16a and the second end surface 16b of the Q-switched element 16. Such a coating layer may be a part of the saturable absorption portion. That is, the saturable absorption portion may include the coating layer in addition to the saturable absorption body (the Q-switched element 16 in FIG. 1), and when the coating layer is provided on an end surface of the saturable absorption body, an end surface of the coating layer corresponds to the end surface of the saturable absorption portion.

In the laser device 1A, a length of the laser medium 14 and the Q-switched element 16 in the direction of the Z-axis and a shape of the second reflecting portion 12 (particularly, a size and radius of curvature of the second reflecting portion 12, for example) may be set in consideration of the resonator length d, the gain, and the like so that desired pulsed laser light L2 having a donut shape is obtained. For example, the length of the laser medium 14 and the Q-switched element 16 in the direction of the Z-axis and the shape of the second reflecting portion 12 may be set so that the magnification m is $2^{1/2}$ or more, 3 or less or 1.2 or more, and 3 or less.

Next, an operation and effect of the laser device 1A will be described.

When the excitation light L1 from the excitation light supply unit is incident on the first surface 10a of the first reflecting portion 10, the excitation light L1 is transmitted through the first reflecting portion 10 and is supplied to the laser medium 14. Accordingly, the laser medium 14 is excited and the light having the second wavelength is emitted. The light having the second wavelength emitted from the laser medium 14 is reflected toward the first reflecting portion 10 by the second reflecting portion 12. The first reflecting portion 10 reflects the light having the second wavelength. Accordingly, the light having the second wavelength passes through the laser medium 14 a plurality of times. The light having the second wavelength is amplified through stimulated emission when the light having the second wavelength passes through the laser medium 14, and is output as the pulsed laser light L2 due to the action of the Q-switched element 16.

Since the second reflecting portion 12 reflects the light having the second wavelength, the light having the second wavelength is not substantially transmitted through the second reflecting portion 12. Since the second reflecting portion 12 is curved toward the first reflecting portion 10, the light having the second wavelength reflected by the second reflecting portion 12 diverges. Therefore, the pulsed laser light L2 is output from the outside of the second reflecting portion 12 when viewed from the direction of the Z-axis. As a result, a shape (an intensity distribution) of the pulsed laser light L2 is a donut shape as illustrated in FIG. 2. That is, the laser device 1A can output a donut-shaped pulsed laser light L2.

The light having the second wavelength reflected by the second reflecting portion 12 diverges. Therefore, the light having the second wavelength passes through a wider region of the laser medium 14 as compared with a case in which both the first reflecting portion and the second reflecting portion are planar mirrors. Accordingly, it is easy for a large amount of stimulated emission to occur from the laser medium 14 and thus, the pulsed laser light L2 having a higher output power as compared with the case in which both the first reflecting portion and the second reflecting portion are planar mirrors can be obtained when the excitation area is the same. In this case, although the output power of the pulsed laser light L2 is increased, a donut-shaped beam is positively selected and a gain shift from a donut mode to a higher-order mode is eliminated to achieve improvement of the output power of the pulsed laser light L2 while suppressing deterioration of the beam quality ($M^2$). That

is, in the laser device 1A, it is possible to realize improvement of an output power while suppressing deterioration of the beam quality.

In the laser device 1A, since the first reflecting portion 10 functions as a planar mirror, it is easy for the light having the second wavelength from the second reflecting portion 12 to diverge even when the light is reflected by the first reflecting portion 10. However, in the case of end surface excitation as in the laser device 1A, a thermal lens effect caused by a quantum defect according to the excitation occurs. Therefore, the light having the second wavelength reflected by the second reflecting portion 12 and further reflected by the first reflecting portion 10 can be confined by the thermal lens effect, as compared with a case in which there is no thermal lens effect. Therefore, even when the first reflecting portion 10 is the planar mirror, an unstable resonator is formed by the first reflecting portion 10 and the second reflecting portion 12, thereby enabling laser oscillation. Therefore, the length of the laser medium 14 and the Q-switched element 16 in the direction of the Z-axis, the shape of the second reflecting portion 12 in the laser device 1A, and the like are set in additional consideration of the thermal lens effect in the laser medium 14 due to the excitation light L1.

In the embodiment in which the first reflecting portion 10 is provided on the first end surface 14a and the first reflecting portion 10 is the planar mirror, the first end surface 14a may also be a flat surface, which allows the laser medium 14 to be easily processed. Further, by using the thermal lens effect, the divergence of the pulsed laser light L2 can be suppressed, and for example, the light can be output as parallel light.

Since the second reflecting portion 12 is a dielectric multilayer film, damage to the second reflecting portion 12 can be prevented even when high-intensity light having the second wavelength is incident on the second reflecting portion 12. As a result, it is possible to stably output high-power pulsed laser light L2.

The first reflecting portion 10 is provided on the first end surface 14a of the laser medium 14, and the second reflecting portion 12 is provided on the second end surface 16b of the Q-switched element 16. Therefore, since the resonator length d can be shortened, a small size of the laser device 1A and a short pulse can be achieved.

The laser medium 14 and the Q-switched element 16 are made of ceramic, and when the laser medium 14 and the Q-switched element 16 are bonded, the resonator length d can be shortened. As a result, it is possible to output the pulsed laser light L2 having a pulse width of sub-nanoseconds.

Since the unstable resonator formed by the first reflecting portion 10 and the second reflecting portion 12 is a magnifying optical system, the magnification m is, for example, $2^{1/2}$ or more when the magnification m of the pulsed laser light L2 output from the laser device 1A is defined by b/a as illustrated in FIG. 2. When the magnification m is too high, a laser oscillation threshold becomes great and it is difficult for laser oscillation to occur. Therefore, in the laser device 1A, for example, the size, radius of curvature, and the like of the second reflecting portion 12 are preferably set so that the magnification m is 3 or less. When the magnification m is 3 or less, the laser oscillation threshold can be lowered even when the unstable resonator formed by the first reflecting portion 10 and the second reflecting portion 12 is a magnifying optical system. $1-m^{-2}$ indicates a reciprocating loss in the resonator. For example, when $m = 2^{1/2}$, the reciprocating loss is 50%.

In the embodiment in which the LD 18A that outputs the excitation light L1 performs the quasi-continuous wave oscillation and the excitation light L1 is pulsed light, it is possible to suppress heat generation in the laser medium 14 while achieving a high output power of the pulsed laser light L2 using high-output power excitation light L1.

Next, various modification examples of the laser device 1A will be described.

(First modification example)

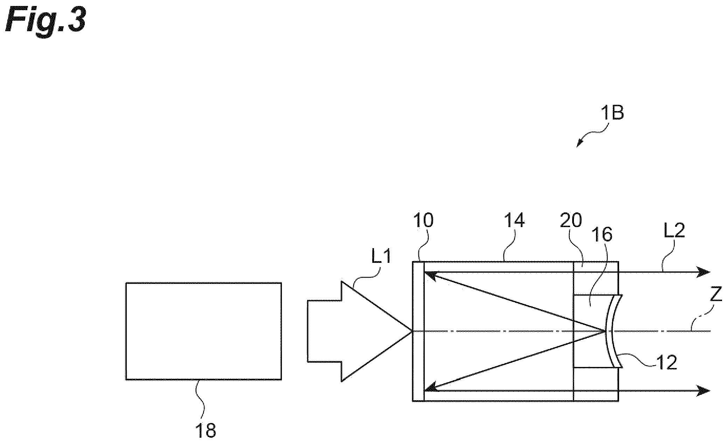

A laser device 1B according to a first modification example mainly differs from the laser device 1A in that a laser medium 20 is further provided around the Q-switched element 16, as illustrated in FIG. 3. The laser device 1B will be described with a focus on the above difference.

The laser medium 20 surrounds the Q-switched element 16 when viewed from the direction of the Z-axis. A material of the laser medium 20 is the same as the material of the laser medium 14. Therefore, the laser medium 20 emits the light having the second wavelength according to the incidence of the excitation light L1.

The laser medium 20 may be bonded to the Q-switched element 16. This case corresponds to an embodiment in which a composite component of the laser medium 14 and the Q-switched element 16 is disposed on the second end surface 14b side of the laser medium 14. Alternatively, since the laser medium 20 is made of the same material as the laser medium 14, the laser medium 20 and the laser medium 14 may be one member. This case corresponds to an embodiment in which a recess is provided in an end surface opposite to the first reflecting portion 10 in one laser medium, and the Q-switched element 16 is accommodated in the recess.

The laser device 1B has at least the same operation and effect as the laser device 1A. The laser medium 20 included in the laser device 1B surrounds the Q-switched element 16 when viewed from the direction of the Z-axis. Therefore, the pulsed laser light L2 further passes through the laser medium 20. When the excitation light L1 is incident on the first reflecting portion 10 (for example, when the excitation light L1 is incident on substantially an entire surface of the first surface 10a) so that the excitation light L1 is also incident on the laser medium 20 at the time of incidence of the excitation light L1 on the first reflecting portion 10, the laser medium 20 is also excited by the excitation light L1. Therefore, when the pulsed laser light L2 passes through the laser medium 20, the pulsed laser light L2 is further amplified. As a result, in the laser device 1B, an output power thereof is further improved.

(Second modification example)

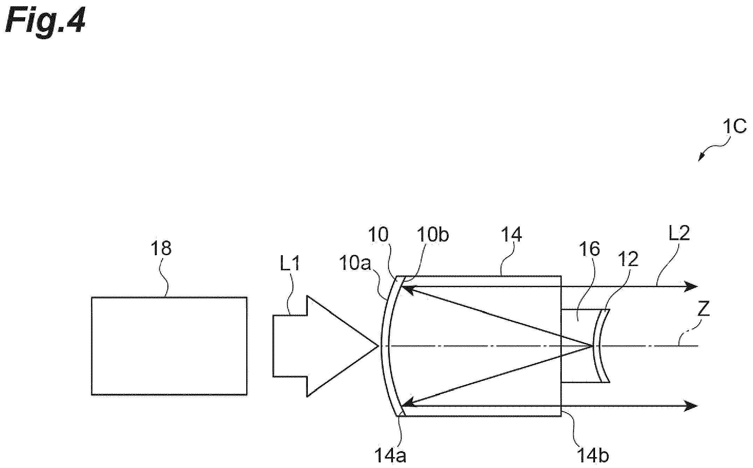

A laser device 1C according to a second modification example differs from the laser device 1A in that the first reflecting portion 10 is curved outward (toward a side opposite to the laser medium 14), as illustrated in FIG. 4. The laser device 1C will be described with a focus on this difference.

The first reflecting portion 10 is curved outward. A radius of curvature of the first reflecting portion 10 may be set so that a desired donut shape is obtained in consideration of the thermal lens effect in the laser medium 14 due to the excitation light L1, the resonator length d, the gain, and the size and radius of curvature of the second reflecting portion 12. For example, the radius of curvature of the first reflecting portion 10 may be set so that the magnification m is $2^{1/2}$ or more and 3 or less. An example of the radius of curvature of the first reflecting portion 10 is 1.4 to 9 mm.

Since the first reflecting portion 10 is provided on the first end surface 14a of the laser medium 14, the first end surface 14a is also curved like the first reflecting portion 10 in the laser device 1C. A radius of curvature of the first end surface 14a is the same as the radius of curvature of the first reflecting portion 10.

The laser device 1C has at least the same operation and effect as the laser device 1A. In the laser device 1C, since the first reflecting portion 10 is curved outward, the first reflecting portion 10 functions as a concave mirror with respect to the light having the second wavelength reflected by the second reflecting portion 12. That is, the first reflecting portion 10 has a condensing function for the light having the second wavelength reflected by the second reflecting portion 12. Therefore, it is easy to confine the light having the second wavelength in the unstable resonator. Since the first reflecting portion 10 has the condensing function as described above, it is easy for divergence of the pulsed laser light L2 to be suppressed, and for example, it is easy for the pulsed laser light L2 to be output as parallel light.

(Third modification example)

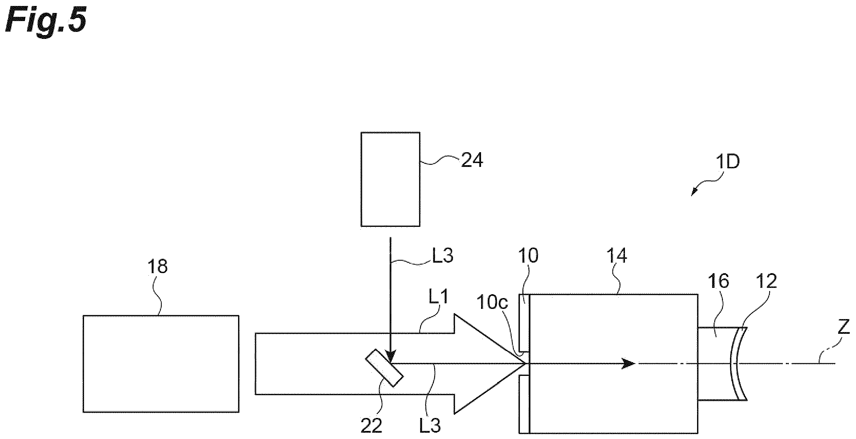

A laser device 1D according to the third modification example differs from the laser device 1A in that the first reflecting portion 10 has an opening 10c as illustrated in FIG. 5. The laser device 1D will be described with a focus on the above difference.

The first reflecting portion 10 has the opening 10c for injecting injected laser light L3 having the second wavelength into the laser medium 14. The opening 10c is formed in at least a part of a region overlapping the second reflecting portion 12 when viewed from the direction of the Z-axis. As illustrated in FIG. 5, the openings 10c can be disposed on the Z-axis.

The injected laser light L3 is laser light for injection synchronization. A size of a cross section orthogonal to a traveling direction of the injected laser light L3, for example, can be equal to or smaller than a size of the opening 10c. In this case, the injected laser light L3 can pass through the opening 10c and be incident on the laser medium 14 without being reflected by the first reflecting portion 10.

The laser device 1D may include an injected laser light supply unit 24 that supplies the injected laser light L3. The injected laser light supply unit 24 may output the injected laser light L3 at an injection timing for injection synchronization.

As illustrated in FIG. 5, in the embodiment in which the excitation light L1 is propagated along the Z-axis and then caused to be incident on the first reflecting portion 10, the injected laser light L3 may be reflected by a reflecting mirror 22 disposed on an optical path (on the Z-axis in FIG. 5) of the excitation light L1 and incident on the opening 10c. Since the reflecting mirror 22 hinders the propagation of a part of the excitation light L1, the reflecting mirror 22 may be small.

In the embodiment illustrated in FIG. 5, a size of the reflecting mirror 22 is not limited, for example, as long as the reflecting mirror 22 has a wavelength selectivity to transmit the excitation light L1 while reflecting the injected laser light L3.

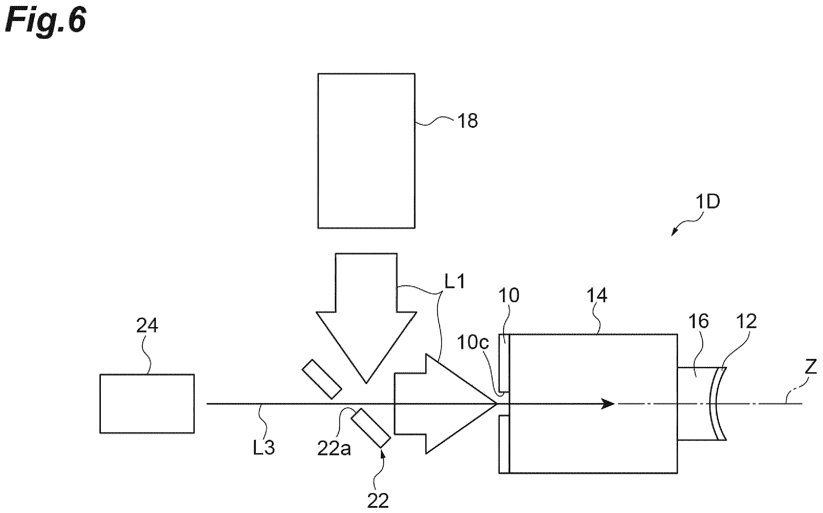

As illustrated in FIG. 6, the injected laser light L3 may be propagated along the Z-axis and then incident on the opening 10c, and the excitation light L1 may be reflected by the reflecting mirror 22 and then incident on the first reflecting portion 10. In the embodiment illustrated in FIG. 6, the reflecting mirror 22 reflects the excitation light L1 and has an opening 22a for passing the injected laser light L3. A size of the opening 22a, for example, is substantially the same as or slightly larger than the size of the cross section orthogonal to the injected laser light L3. This allows the laser medium 14 to be excited by effectively using the excitation light L1. In the embodiment illustrated in FIG. 6, when the reflecting mirror 22 has a wavelength selectivity to transmit the injected laser light L3 while reflecting the excitation light L1, the size of the reflecting mirror 22 is not limited.

The laser device 1D has at least the same operation and effect as the laser device 1A. In the laser device 1D, injection synchronization can be achieved by injecting the injected laser light L3 into the laser medium 14. As a result, a jitter of the laser device 1D can be controlled, and for example, synchronization with an external device and synchronization with a plurality of Q-switch type laser devices can be achieved.

The second reflecting portion 12 of the laser device 1D reflects the light having the second wavelength and does not substantially transmit the light having the second wavelength. Therefore, the laser device 1D has a configuration in which the first reflecting portion 10 is provided with the opening 10c and the injected laser light L3 can be easily injected into the laser medium 14, as illustrated in FIGS. 5 and 6. The laser device 1D has a configuration in which a high output power is possible and jitter control is easy while deterioration of beam quality is suppressed.

In the third modification example, the reflecting mirror 22 may also be a part of the laser device 1D.

(Fourth modification example)

When viewed from the direction of the Z-axis, the size of the Q-switched element 16 may be the same as a size of the laser medium 14. In this case, the second end surface 16b may have a curved region curved toward the first reflecting portion 10 in a part (for example, a central portion) thereof, and the second reflecting portion 12 may be provided in the curved region. That is, the second end surface 16b may be partially coated with the second reflecting portion 12. The laser device according to the fourth modification example also has at least the same operation and effect as the laser device 1A.

(Second embodiment)

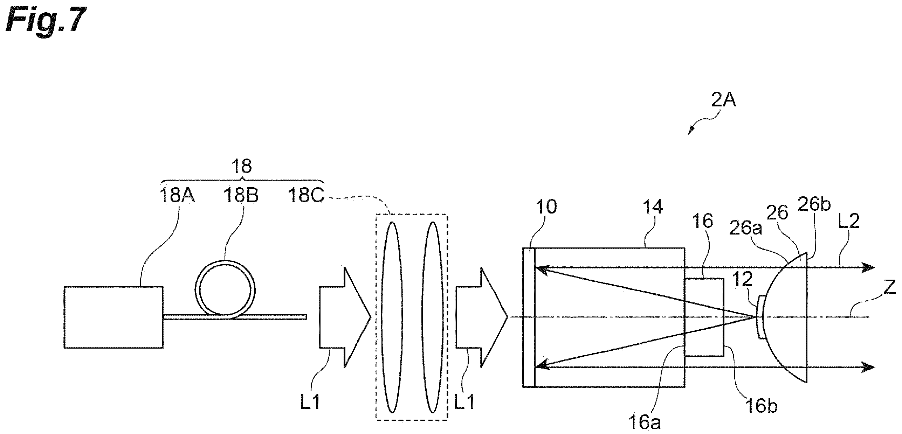

A laser device 2A according to the second embodiment will be described with reference to FIG. 7. The laser device 2A differs from the laser device 1A in that the second reflecting portion 12 is not provided on the second end surface 16b of the Q-switched element 16. The laser device 2A will be described with a focus on this difference.

The laser device 2A includes a support 26 that supports the second reflecting portion 12. The support 26 transmits the light having the second wavelength (the pulsed laser light L2). A transmittance of the support 26 with respect to the light having the second wavelength is 90% or more. An example of a material of the support 26 includes glass.

A surface 26a of the support 26 on the Q-switched element 16 side is a curved region curved toward the Q-switched element 16. A radius of curvature of the surface 26a of the support 26 is the same as a radius of curvature of the second reflecting portion 12. A surface 26b of the support 26 opposite to the Q-switched element 16 can be a flat surface. An example of the support 26 is a plano-convex lens. The curved surface 26a may be AR-coated with respect to the light having the second wavelength. Such an AR coat may also be a part of the support 26.

The second reflecting portion 12 is provided at an apex of the surface 26a of the support 26 (an intersection between the Z-axis and the surface 26a). That is, the surface 26a is partially coated with the second reflecting portion 12. The second reflecting portion 12 can be formed using a thin film forming technique.

The Q-switched element 16 has the same configuration as that of the laser device 1A except that the second end surface 16b is a flat surface. The first reflecting portion 10 and the laser medium 14 have the same configurations as in the case of the laser device 1A.

In the laser device 2A, the first reflecting portion 10 and the second reflecting portion 12 form an unstable resonator as in the case of the laser device 1A. Therefore, the laser device 2A has at least the same operation and effect as the laser device 1A.

Since the second reflecting portion 12 is a dielectric multilayer film, damage to the second reflecting portion 12 can be prevented even when high-intensity light having the second wavelength is incident on the second reflecting portion 12. As a result, it is possible to stably output the high-power pulsed laser light L2.

When the support 26 is a plano-convex lens, the support 26 has a condensing function with respect to the pulsed laser light L2. Therefore, even when the pulsed laser light L2 incident on the support 26 diverges, the divergence can be suppressed and the pulsed laser light L2 can be output as parallel light by an action of the support 26, for example.

The laser device 2A according to the second embodiment can also be modified as in the first to third modification examples of the laser device 1A according to the first embodiment. That is, as in the case of the first modification example, the Q-switched element 16 may be surrounded by the laser medium 20 (see FIG. 3) when viewed from the direction of the Z-axis. The first reflecting portion 10 may be curved to the side opposite to the Q-switched element 16 (see FIG. 4), as in the case of the second modification example. The first reflecting portion 10 may have the opening 10c (see FIGS. 5 and 6) for causing the injected laser light L3 to be incident on the laser medium 14, as in the case of the third modification example. When the same modifications as in the first to third modification examples of the first embodiment are applied to the laser device 2A according to the second embodiment, the laser device to which each modification example is applied has an operation and effect according to each modification, as in the cases of the first to third modification examples.

The support 26 is not limited to the shape described with reference to FIG. 7. For example, the support 26 may be a flat plate capable of transmitting the light having the second wavelength and have a curved region curved toward the Q-switched element 16 in a part of a surface on the Q-switched element 16 side. In this case, the second reflecting portion 12 is provided in the curved region.

In the second embodiment, the size of the Q-switched element 16 may be the same as the size of the laser medium 14 when viewed from the direction of the Z-axis, as in the fourth modification example of the first embodiment. In this case, for example, position adjustment between the laser medium 14 and the Q-switched element 16 is easy. In a case in which one component (hereinafter referred to as an "optical component" for convenience of description) is formed by the laser medium 14 and the Q-switched element 16 being bonded, a plurality of optical components can be easily manufactured when the size of the Q-switched element 16 is the same as the size of the laser medium 14 when viewed from the direction of the Z-axis. For example, the plurality of optical components are manufactured as follows. The laser medium and the Q-switched element having a size larger than a size of each optical component are bonded so that a stacked body of the laser medium and the Q-switched element is manufactured. Then, optical components having a desired size are cut out from the stacked body so that a plurality of optical components can be obtained. In this case, since the optical components can be mass-produced, the laser device can be easily manufactured and manufacturing cost can be reduced. The second reflecting portion 12 and the Q-switched element 16 may be in contact with each other.

Next, experimental example 1 using an embodiment of the laser device will be described. In the description of experimental example 1, the same or equivalent elements as those in the embodiments described with reference to FIGS. 1 to 7 are denoted by the same reference signs, and duplicate description thereof will be omitted. Dimensional ratios in the drawings do not always match those described.

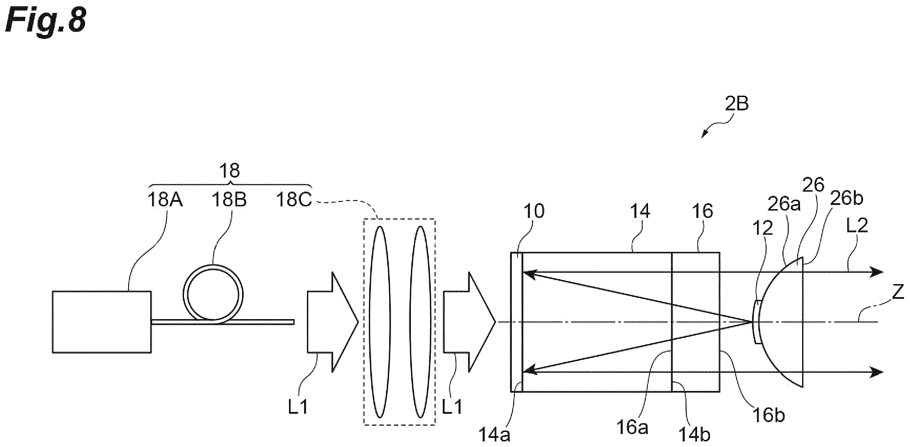

In experimental example 1, the laser device 2B illustrated in FIG. 8 was used. A configuration of the laser device 2B is the same as the configuration of the laser device 2A illustrated in FIG. 7 except that the size of the Q-switched element 16 is the same as the size of the laser medium 14 when viewed from the direction of the Z-axis. Hereinafter, materials, sizes of respective elements, or the like used in experiments will be specifically shown, but the present invention is not limited to application of the materials, the sizes of the respective elements, and the like that are shown.

In experimental example 1, the LD 18A to which the optical fiber 18B was coupled was used, and the excitation light L1 was incident on the first reflecting portion 10 by the incidence optical system 18C. An irradiation region of the excitation light L1 in the first reflecting portion 10 was a circular region having a diameter of about 2.5 mm. An excitation method and repetition frequency for the LD 18A, and a wavelength and output power of the excitation light L1 were as follows.

    · Excitation method: Semi-continuous wave excitation
    · Repetition frequency: 10Hz
    · Wavelength of excitation light L1: 808 nm
    · Output power of excitation light L1: 600 W

Nd:YAG ceramic (Nd addition amount: 1.0 at.%) was used for the laser medium 14. Cr:YAG ceramic was used for the Q-switched element 16. However, there is no essential difference even when either or both are single crystals, not the ceramics. An initial transmittance of the Q-switched element 16 was 30%. The laser medium 14 and the Q-switched element 16 were bonded. A total length of the laser medium 14 and the Q-switched element 16 in the direction of the Z-axis was 7 mm. However, a medium length up to the resonator length is allowed.

The first end surface 14a of the laser medium 14 was a flat surface, and a dielectric multilayer film functioning as an HR coat with respect to the light having the wavelength of 1064 nm and functioning as an AR coat with respect to the light having the wavelength of 808 nm was provided as the first reflecting portion 10 on the first end surface 14a. The second end surface 16b of the Q-switched element 16 was AR-coated with respect to the light having the wavelength of 1064 nm.

For the support 26, a plano-convex lens having a radius of curvature of the surface 26a of 52 mm was used. A central portion of the surface 26a of the support 26 was partially coated with a dielectric multilayer film that functions as an HR coat with respect to the light having the wavelength of 1064 nm, as the second reflecting portion 12. A region of the surface 26a other than the second reflecting portion 12 was AR-coated. A shape of the second reflecting portion 12 was a circle with a diameter of 2 mm when viewed from the direction of the Z-axis (one direction). The resonator length d was 10 mm.

The first reflecting portion 10 of the laser device 2B was irradiated with the excitation light L1 under the above conditions, and a beam pattern, pulse width, beam quality, polarized state, and output power stability of the output pulsed laser light L2 were confirmed.

[Beam pattern]

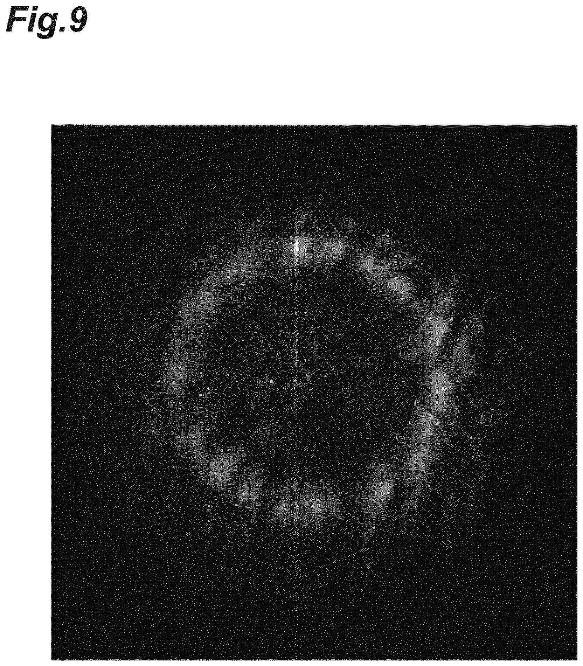

The beam pattern of the output pulsed laser light L2 was acquired with a CMOS camera. The obtained beam pattern had a donut shape as illustrated in FIG. 9.

[Pulse width]

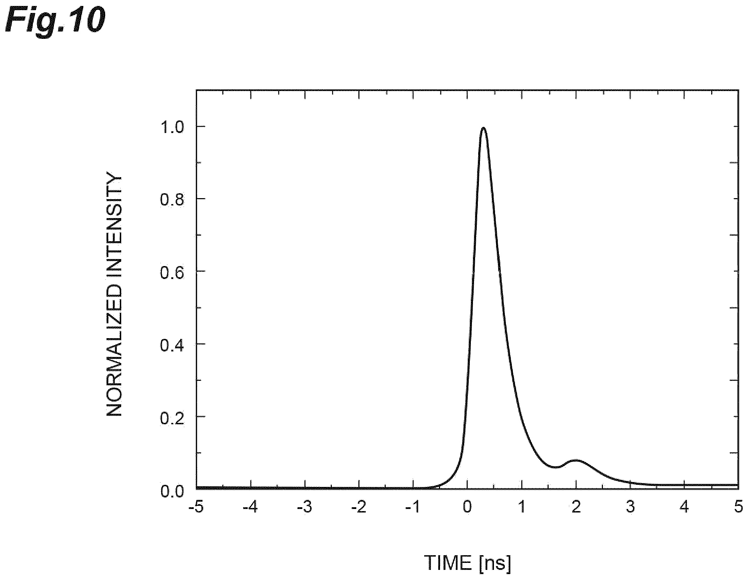

The pulse width was measured by the pulsed laser light L2 being detected with a photodetector. A measurement result was as illustrated in FIG. 10. A horizontal axis in FIG. 10 indicates time (ns), and time 0 on the horizontal axis is a time when the pulsed laser light L2 is incident on the photodetector. A vertical axis in FIG. 10 indicates a normalized intensity obtained by normalizing an intensity of the pulsed laser light L2 with a maximum intensity in one pulse of the pulsed laser light L2. From FIG. 10, a pulse width of 570 ps could be realized in full width at half maximum (FWHM).

[Beam quality]

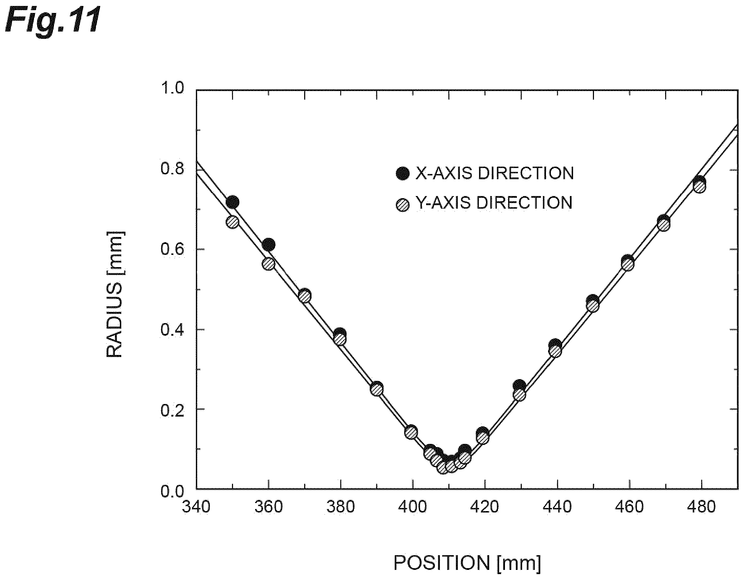

Beam quality was evaluated by $M^2$. Specifically, the pulsed laser light L2 was condensed by a lens (focal length: 300 mm), a beam diameter was measured at a plurality of positions before and after a condensing position in a propagation direction of the pulsed laser light L2, and $M^2$ was calculated from a result of the measurement. A result of measuring the beam diameter was as illustrated in FIG. 11. A horizontal axis indicates a measurement position (mm) of the beam diameter, and a vertical axis indicates a radius of the beam. The radius of the beam was set to a radius at which a light power is 86.5 % and a light intensity is decreased to $1/e^2$ of the peak. For the beam diameter, lengths in an X-axis direction and a Y-axis direction of a three-dimensional coordinate system set with respect to the Z-axis were obtained. $M^2$ calculated from FIG. 11 was 2.3 in the X-axis direction and 2.0 in the Y-axis direction.

[Polarized state]

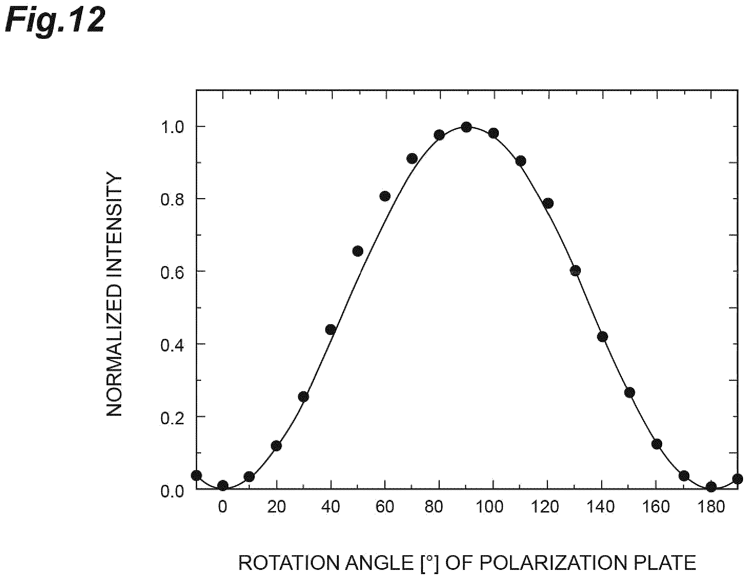

A linear polarizer (hereinafter simply referred to as a "polarizer") was disposed in front of the photodetector, and the intensity of the pulsed laser light L2 was measured while rotating the polarizer. A measurement result was as illustrated in FIG. 12. A horizontal axis of FIG. 12 indicates a rotation angle (°) of the polarizer, and a vertical axis indicates a normalized intensity obtained by normalizing the measurement result with a maximum intensity. FIG. 12 also illustrates a fitting curve in which the measurement result is fitted. From the result illustrated in FIG. 12, it can be understood that the linearly polarized pulsed laser light L2 could be output.

[Output power stability]

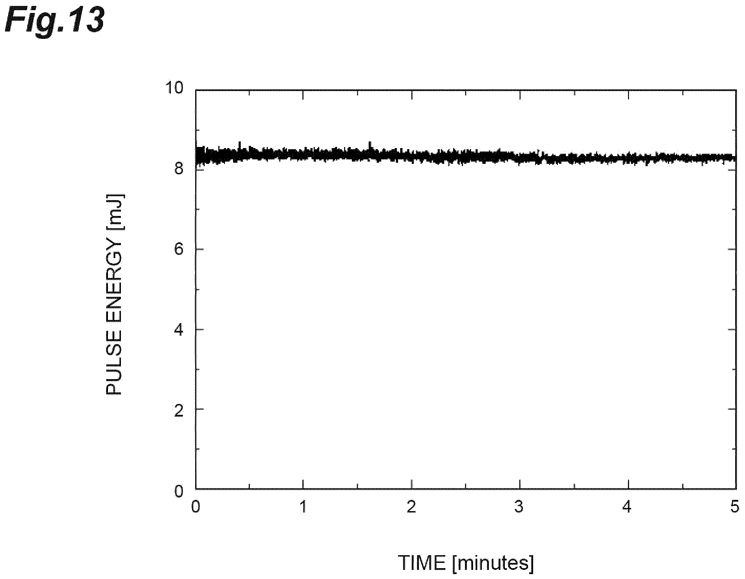

The pulsed laser light L2 was detected for 5 minutes with a photodetector. A measurement result was as illustrated in FIG. 13. A horizontal axis indicates time (minutes), and a vertical axis indicates pulse energy. From FIG. 13, it was found that an optical output of about 8.3 mJ was obtained. Further, a root mean square (RMS) was 1.0%.

From the results of the above experiment, it can be understood that it is possible to obtain the high-power pulsed laser light L2 while suppressing a decrease in beam quality by constituting the unstable resonator using the first reflecting portion 10 and the second reflecting portion 12 as in the laser device 2B. Further, it was confirmed that the unstable resonator is established and the pulsed laser light L2 is obtained even when the planar mirror is used as the first reflecting portion 10.

Although the embodiments, experimental examples, and modification examples of the present invention have been described above, the present invention is not limited to the embodiments, experimental examples, and modification examples, but is defined by the scope as defined by the appended clams.

For example, the laser device may include a plurality of laser media. In this case, the laser device also includes a plurality of heat sinks. When the laser device includes a plurality of laser media and a plurality of heat sinks, the plurality of laser media and the plurality of heat sinks can be alternately stacked in one direction. A stacking direction of the laser media and the heat sinks is the direction of the Z-axis in FIG. 1. The heat sink has a transmittance of 95% or more, preferably, 97% or more with respect to the first and second wavelengths. A material of the heat sink is a substance having a thermal conductivity similar to or higher than that of the laser medium. Examples of the material of the heat sink include sapphire, diamond, and additive-free YAG. The heat sink may contain an oxide. The laser medium and the heat sink may be bonded (for example, the surface-activated bonding). A coating layer that adjusts reflection characteristics (for example, reflection characteristics of the light having the second wavelength) may be provided on surfaces on which the laser medium and the heat sink face each other. In a stacked body of the laser media and the heat sinks, when the heat sink is located at the end opposite to the Q-switched element (a position farthest from the Q-switched element), the first reflecting portion may be provided on an end surface of the heat sink. As in the first and second embodiments and various modification examples thereof, even when there is one laser medium, the heat sink may be provided on the end surface of the laser medium on the first reflecting portion side.

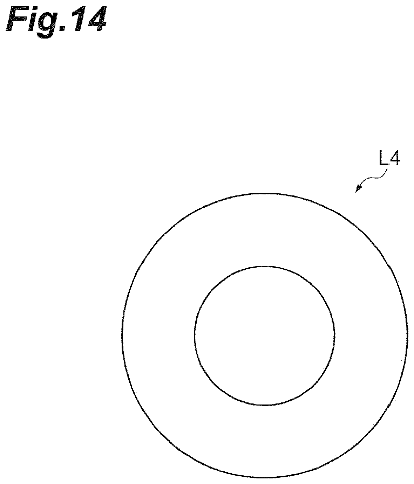

The excitation light itself may have a donut shape as illustrated in FIG. 14. Excitation light L4 illustrated in FIG. 14 shows a case in which an intensity distribution continuously forms a circular ring. Such excitation light L4 can be realized by causing the excitation light L4 to be incident on the optical fiber 18B except for a central axis of the optical fiber 18B or disposing a shielding plate on an optical axis of the excitation light L4 when the excitation light L4 is propagated using the optical fiber 18B, as illustrated in FIG. 1, for example.

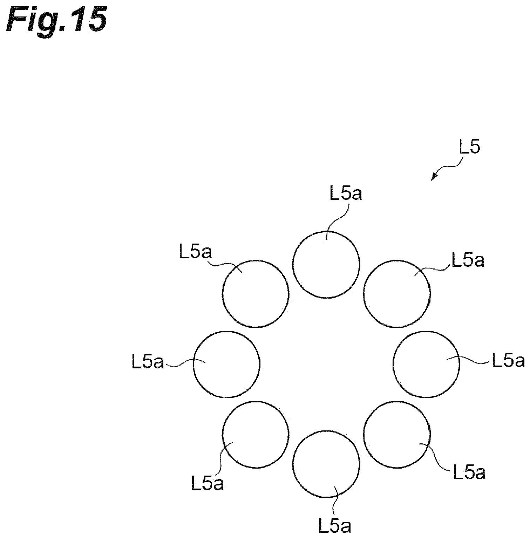

The excitation light may include a plurality of small excitation light L5a like excitation light L5 illustrated in FIG. 15. The number of small excitation light L5a is not limited to eight as illustrated in FIG. 15. The number of small excitation light L5a is, for example, 4 or more. Such excitation light L5 can be realized by disposing LDs each that output the small excitation light L5a in a circular ring shape or by disposing optical fibers each that output the small excitation light L5a in a circular ring shape, for example. In FIG. 15, the plurality of small excitation light L5a is disposed to form the circular ring, but a disposition relationship of the plurality of small excitation light L5a is not limited to that illustrated in FIG. 15. When the plurality of small excitation light L5a is output from different LDs as illustrated in FIG. 15, a cost can be reduced as compared with a case in which one high output power LD is used.

In an example not falling under the scope claimed the present invention can also be applied to an optical resonator such as an optical parametric oscillator. In this case, an example of the material of the laser medium includes a non-linear optical material. Examples of the non-linear optical material include LN, LT, KTP, KTA, RTP, RTA, LBO, CLBO, CBO, BBO, BiBO, KBBF, BABF, crystal, COB, YCOB, GdCOB, GdYCOB, YAB, KDP, KD*P, and ZGP.

Next, experimental example 2 using the embodiment of the laser device described in the above embodiment will be described. In the description of experimental example 2, the same or equivalent elements as those in the embodiments described with reference to FIGS. 1 to 7 are denoted by the same reference signs, and duplicate description thereof will be omitted. Dimensional ratios in the drawings do not always match those described.

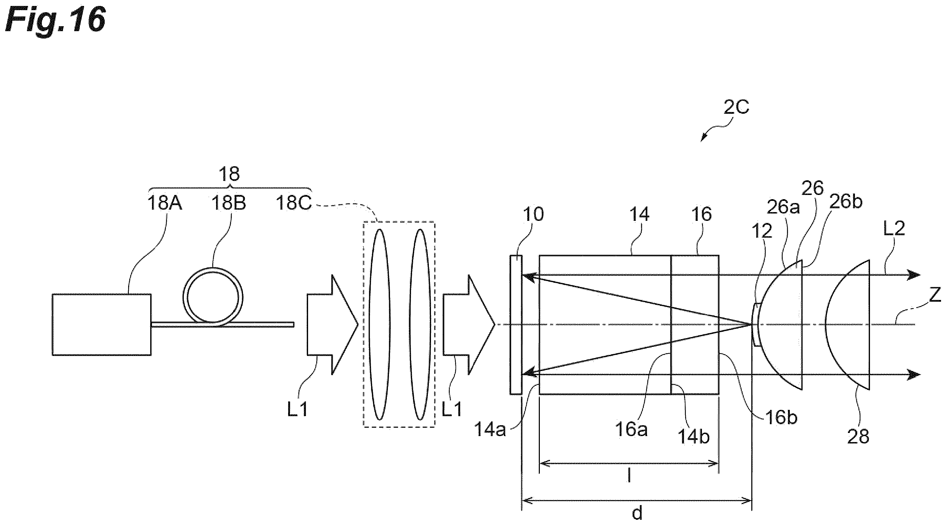

In experimental example 2, the laser device 2C illustrated in FIG. 16 was used. A configuration of the laser device 2C is the same as the configuration of the laser device 2A illustrated in FIG. 7 except that the size of the Q-switched element 16 is the same as the size of the laser medium 14 when viewed from the direction of the Z-axis. Hereinafter, materials used in experiments, sizes of respective elements, or the like will be specifically shown, but the present invention is not limited to the shown materials, size of respective elements, and the like.

In experimental example 2, an LD 18A (manufactured by Dilas diodenlaser GmbH) to which the optical fiber 18B was coupled was used, and the excitation light L1 was incident on the first reflecting portion 10 by the incidence optical system 18C. A diameter of the optical fiber 18B was 0.8 mm. The incidence optical system 18C was a telescope using two lenses. An excitation method for the LD 18A, and a wavelength and output power of the excitation light L1 were as follows.

· Excitation method: Semi-continuous wave excitation
· Wavelength of excitation light L1: 808 nm
· Output power of excitation light L1: 700 W

A maximum operable pulse width of the LD 18A used in experimental example 2 was 500 μs. In experimental example 2, a shorter pulse width was used depending on the experiment.

For the laser medium 14, an Nd:YAG ceramic (addition amount of $Nd^{3+}$:1.1 at.%) was used. $Cr^{4+}$:YAG ceramic was used for the Q-switched element 16. An initial transmittance of the Q-switched element 16 was 30%. The laser medium 14 and the Q-switched element 16 were bonded. A length l of the bonded body of the laser medium 14 and the Q-switched element 16 in the direction of the Z-axis was 7 mm, and a volume of the bonded body was $6 \times 6 \times 7$ mm$^3$.

A planar mirror that reflects the light having the wavelength of 1064 nm and transmits the light having the wavelength of 808 nm was used for the first reflecting portion 10. Both end surfaces of the bonded body of the laser medium 14 and the Q-switched element 16 (that is, the first end surface 14a of the laser medium 14 and the second end surface 16b of the Q-switched element 16) are AR-coated with respect to the light having the wavelength of 1064 nm and the light having the wavelength of 808.

For the support 26, a plano-convex lens of which a radius of curvature of the surface 26a was 50 mm was used. A central portion of the surface 26a of the support 26 was partially coated with a dielectric multilayer film that functions as an HR coat with respect to the light having the wavelength of 1064 nm, as the second reflecting portion 12. A region of the surface 26a other than the second reflecting portion 12 was AR-coated. A shape of the second reflecting portion 12 was a circle with a diameter of 2 mm when viewed from the direction of the Z-axis (one direction). The resonator length d was 10 mm.

In the laser device 2C, one lens 28 was disposed in order to collimate light output from the unstable resonator. A convex lens was used as the lens 28. A focal length of the lens 28 was 100 mm to 150 mm, and was selected according to a position of the lens 28.

The first reflecting portion 10 of the laser device 2C was irradiated with the excitation light L1 under the above conditions, and the pulse energy, pulse width, and beam quality ($M^2$) of the output pulsed laser light L2 were measured.

The pulse energy was measured using a pyroelectric element (pyroelectric energy sensor) (manufactured by Ophir Optronics Solutions Ltd.). The pulse width was measured using a photodetector with a rise time of 30 ps and a 13 GHz oscilloscope. A beam quality measurer (Beam quality $M^2$ tool manufactured by Cinogy technologies) and analysis software (RayCi) according to ISO 11146 were used to determine a beam size of 86.5% of a second moment or light power,-and $M^2$.

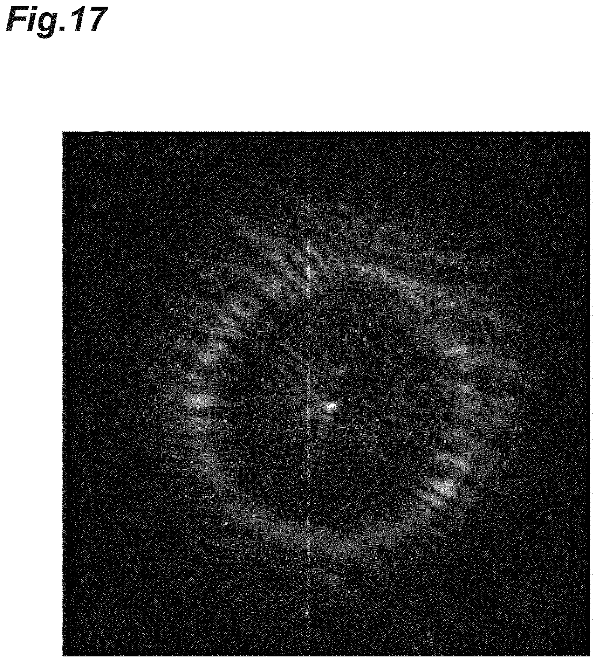

FIG. 17 is a diagram illustrating a beam pattern of the output pulsed laser light L2. As illustrated in FIG. 17, the beam pattern of the output pulsed laser light L2 had a donut shape that was substantially symmetric. A Poisson spot appearing at a center of the pulsed laser light L2 having a donut shape is considered to be an influence of diffraction due to an edge of the second reflecting portion 12, which is a resonator mirror on the output side.

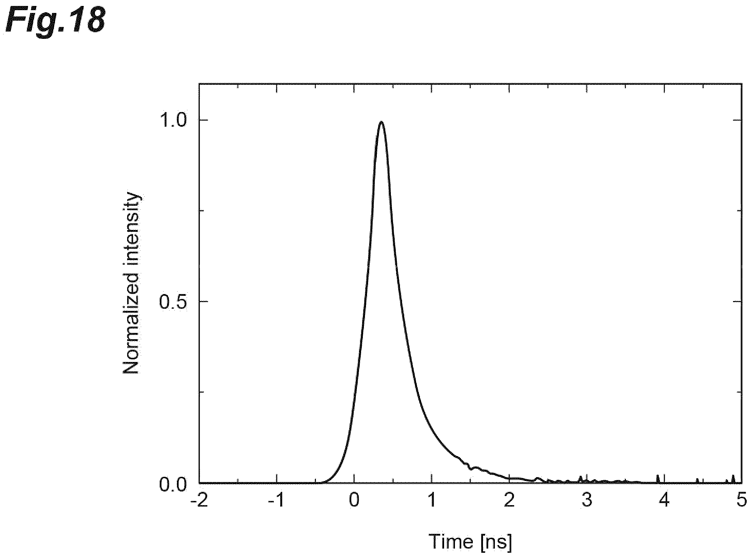

FIG. 18 is a diagram illustrating a result of measuring the pulse width in experimental example 2. A horizontal axis in FIG. 18 indicates time (ns), and time 0 on the horizontal axis is a time when the pulsed laser light L2 is incident on the photodetector. A vertical axis in FIG. 18 indicates a normalized intensity obtained by normalizing the intensity of the pulsed laser light L2 with a maximum intensity of the pulsed laser light L2 in one pulse. The pulse width was 476 ps. The pulse width is a value of a full width at half maximum unless otherwise noted.

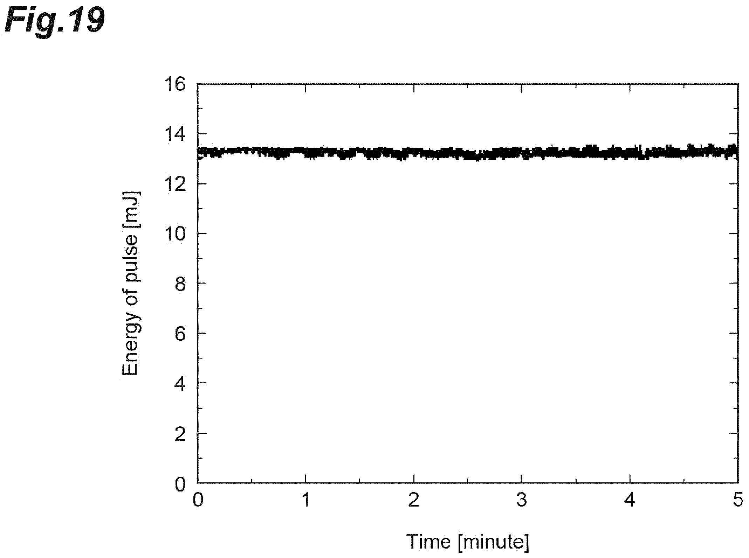

FIG. 19 is a diagram illustrating stability of pulse energy for 5 minutes. A horizontal axis indicates time (minutes), and a vertical axis indicates the pulse energy. From FIG. 19, an average energy (optical output) of 13.2 mJ having a root mean square (RMS) of 1.0% was obtained at a repetition frequency of 10 Hz.

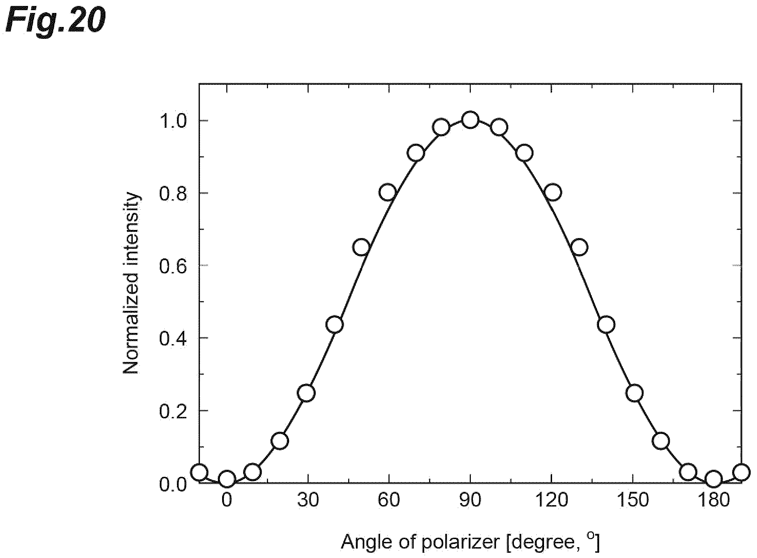

In experimental example 2, a polarized state of the pulsed laser light L2 at a repetition frequency of 10 Hz was confirmed. Specifically, a linear polarizer (hereinafter referred to as a "polarizer") was disposed in front of a pyroelectric element, and an intensity of the pulsed laser light L2 was measured while rotating the polarizer. A measurement result was as illustrated in FIG. 20. A horizontal axis of FIG. 20 indicates a rotation angle (°) of the polarizer, and a vertical axis indicates a normalized intensity obtained by normalizing the measurement result with a maximum intensity. FIG. 20 also illustrates a fitting curve in which the measurement result is fitted. When a maximum transmitted intensity and a minimum transmitted intensity are Imax and Imin, respectively, a polarization ratio expressed as {(Imax - Imin)/(Imax + Imin)} was 0.997.

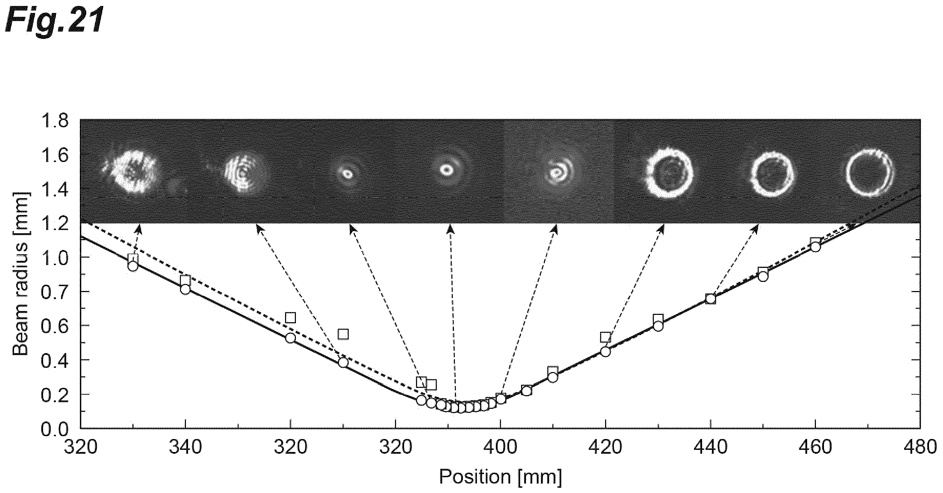

Beam quality was evaluated by $M^2$. Specifically, the pulsed laser light L2 was condensed by a lens (focal length: 300 mm). The beam diameters were measured at a plurality of positions before and after a condensing position in the propagation direction of the pulsed laser light L2. $M^2$ was calculated from a result of the measurement. A result of measuring the beam diameter was as illustrated in FIG. 21. A horizontal axis in FIG. 21 indicates a position (mm) at which the beam diameter is measured, and a vertical axis indicates a radius of the beam (a beam radius). In FIG. 21, radii of the beam in an X-axis direction and a Y-axis direction of a three-dimensional coordinate system set with respect to the Z-axis is illustrated. Square marks in FIG. 21 indicate a radius of the beam in the X-axis direction, and white circle marks indicate a radius of the beam in the Y-axis direction. In FIG. 21, beam patterns at respective measurement positions are also illustrated. As illustrated in FIG. 21, a far field pattern at a focal position was an airy disc and an airy pattern.

$M^2$ calculated from FIG. 21 was 6.8 in the X-axis direction and 5.3 in the Y-axis direction. A numerical value of $M^2$ in experimental example 2 is a value based on second-moment beam diameters. In addition, $M^2_{PC}$ based on a beam diameter of 86.5% of the light power was also calculated. $M^2_{PC}$ in the X-axis direction and the Y-axis direction were 6.5 and 5.2, respectively. Here, an average $M^2_{ave}$ of $M^2$ in the X-axis direction and the Y-axis direction is defined as Equation (1) below.

[Math. 1]

$$M^2_{ave} = \sqrt{M^2_X M^2_Y} \quad \cdots (1)$$

In this case, the average $M^2_{ave}$ of $M^2$ calculated in the X-axis direction and the Y-axis direction was 6. Similarly, an average $M^2_{ave}$ of $M^2_{pc}$ calculated in the X-axis direction and the Y-axis direction was 5.8. Hereinafter, $M^2$ indicating the beam quality in experimental example 2 means the above average $M^2_{ave}$. The same

applies to $M^2_{PC}$.

Further, in experimental example 2, the laser device 2C having an unstable resonator was compared with a laser device (hereinafter referred to as a "comparative laser device") having a stable resonator. An experimental example for this comparison is referred to as experimental example 2a.

A configuration of the comparative laser device was the same as that of the laser device 2C except that in the laser device 2C, a planar mirror for forming a stable resonator was disposed together with the first reflecting portion 10 instead of the second reflecting portion 12. A reflectance of the planar mirror was 50% with respect to the light having the wavelength of 1064 nm.

In experimental example 2a, the experiment using the laser device 2C and the comparative laser device was performed under the same conditions except for the configuration of the above device.

A comparison between the laser device 2C and the comparative laser device was performed at different laser energy levels. Specifically, the laser medium 14 was excited with three different excitation sizes by changing a position of the laser medium 14 with respect to the incidence optical system 18C, which is a telescope, within a range of several mm. A diameter of the excitation light L1 on the first end surface 14a (see FIG. 16) of the laser medium 14 was about 2.6 mm with a difference of about 10%. When the incidence optical system 18C and the laser medium 14 are close to each other as 5 mm and an energy of the excitation light L1 is high, it is difficult to image the excitation light L1. Therefore, the diameter of the excitation light L1 was estimated as follows.

A 0.1 mm thick Nd:YAG ceramic was separately prepared, and the incidence optical system 18C was disposed at the same distance as in a case in which the laser device 2C was compared with the comparative laser device, and fluorescence generated due to irradiation of the Nd: YAG ceramic with the excitation light L1 was imaged. The diameter of the excitation light L1 was estimated from a result of the imaging.

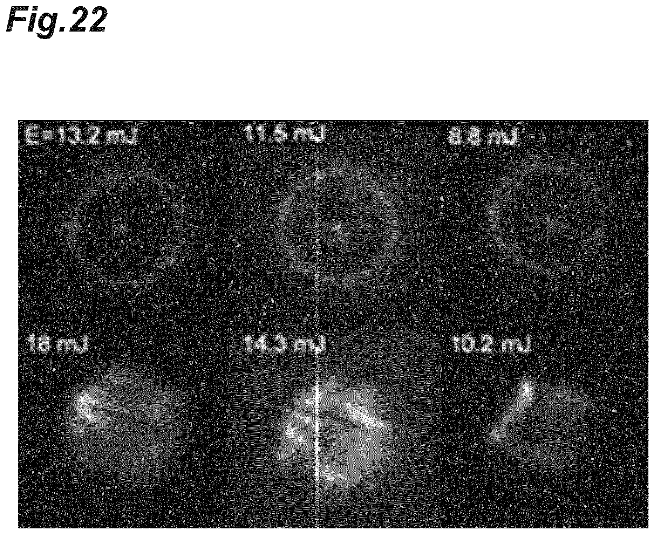

FIG. 22 is a diagram illustrating a result of measuring beam patterns of the pulsed laser light output from the laser device 2C illustrated in FIG. 16 and the comparative laser device when sizes of excitation light are different. Numerical values in FIG. 22 indicate energies of output pulsed laser light. Beam patterns of 8.8 mJ, 11.5 mJ, and 13.2 mJ among the numerical values in FIG. 22 are beam patterns of the output pulsed laser light L2 output from the laser device 2C with respect to the excitation light L1 for the three different diameters described above (that is, under three different excitation conditions). Beam patterns of 10.2 mJ, 14.3 mJ, and 18 mJ among the numerical values in FIG. 22 are paired with 8.8 mJ, 11.5 mJ and 13.2 mJ in relation to the excitation light L1. That is, the conditions of the excitation light L1 used at the time of acquiring the beam pattern of 8.8 mJ and the conditions of the excitation light L1 used at the time of acquiring the beam pattern of 10.2 mJ are the same.

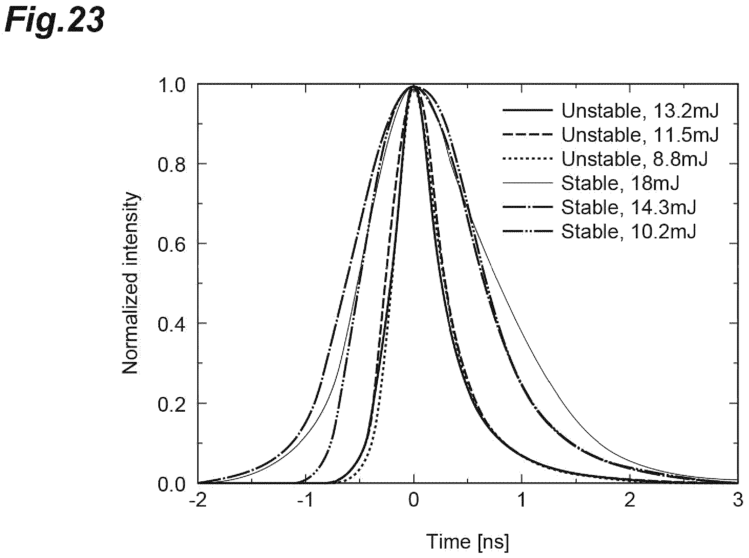

In the case of the laser device 2C having the unstable resonator, substantially the same patterns were obtained under the three different excitation conditions, as illustrated in FIG. 22. On the other hand, in the case of the comparative laser device having the stable resonator, the patterns were different from each other and deteriorated due to oscillation in a higher-order mode. As a result, a pulse width of the pulsed laser light output from the comparative laser device having the stable resonator was wider than a pulse width of the pulsed laser light L2 output from the laser device 2C having the unstable resonator due to the oscillation in the higher-order mode by the stable resonator, as illustrated in FIG. 23. FIG. 23 illustrates a result of measuring the pulse width of the pulsed laser light having each beam pattern illustrated in FIG. 22. A horizontal axis in FIG. 23 indicates time (ns), and a vertical axis indicates a normalized intensity. Respective results indicated by "unstable" and "stable" in FIG. 23 mean results of the laser device 2C having the unstable resonator and the comparative laser device having the stable resonator, and energy values illustrated in FIG. 23 correspond to the energy values illustrated in FIG. 22.

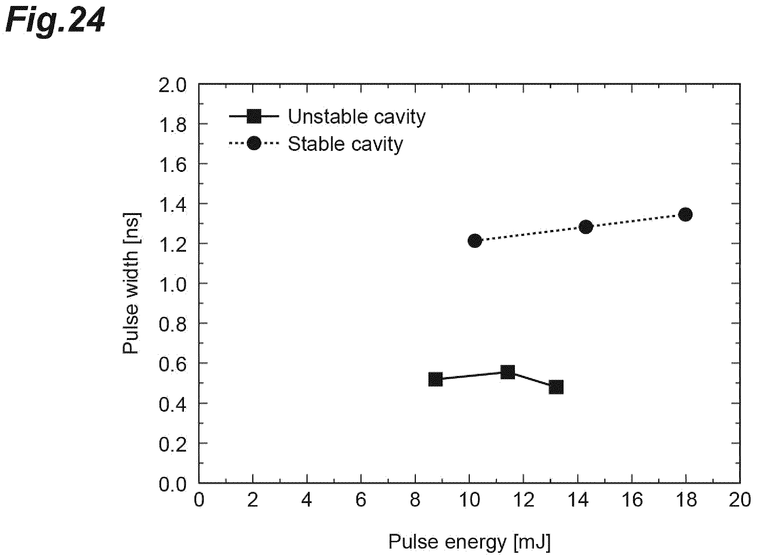

FIG. 24 is a drawing in which the pulse width calculated from the result illustrated in FIG. 23 is plotted. A horizontal axis of FIG. 24 indicates a pulse energy (mJ), and a vertical axis indicates the pulse width (ns). As illustrated in FIG. 24, the pulse width of the pulsed laser light L2 output from the laser device 2C was about 0.5 ns. On the other hand, the pulse width of the pulsed laser light output from the comparative laser device was about 1.25 ns, which was about 2.5 times that of the pulsed laser light L2 output from the laser device 2C.

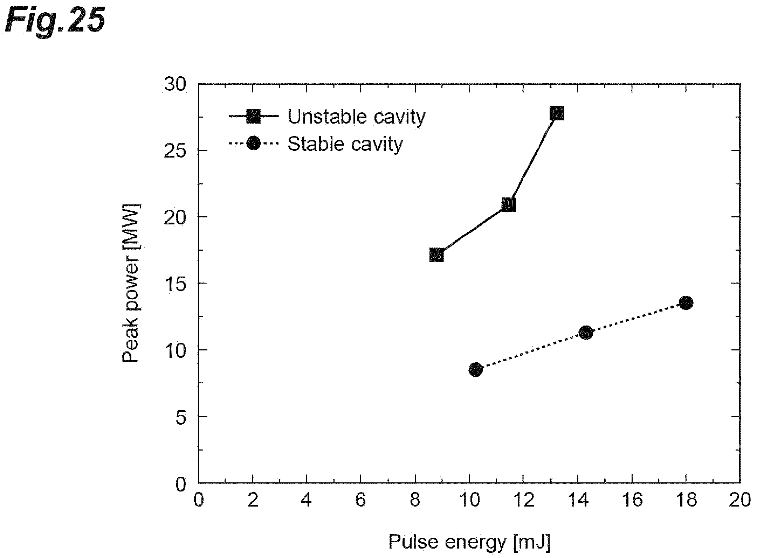

That is, in the laser device 2C that includes an unstable resonator and can realize a uniform donut pattern, high peak power can be realized through realization of a shorter pulse width. FIG. 25 illustrates a result of measuring the peak power. A horizontal axis of FIG. 25 indicates the pulse energy (mJ), and a vertical axis indicates the peak power (MW). In FIG. 25, a result of pulsed laser light at different energy levels output from the laser device 2C having the unstable resonator and the comparative laser device having the stable resonator are illustrated, as in the case of FIGS. 22 to 24. Since the pulse width is widened when the stable resonator is used, a maximum peak power of 27.7 MW has been realized in a case in which the unstable resonator is used.

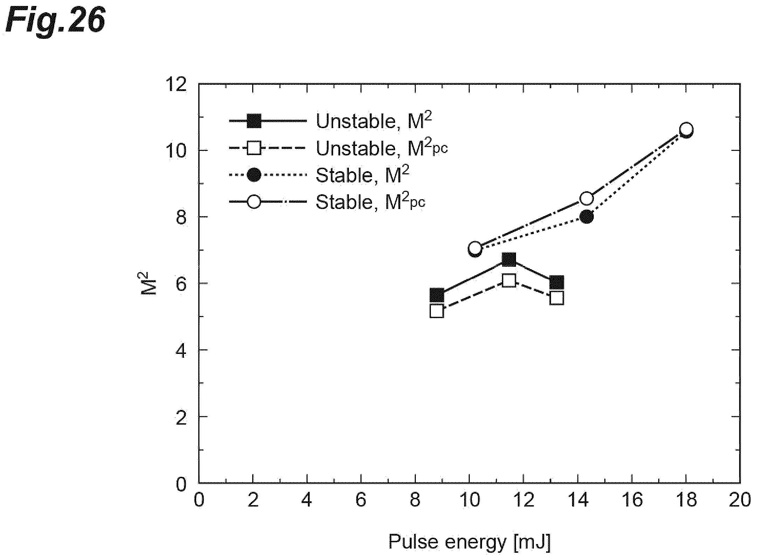

Deterioration of the beam pattern also has an influence on the beam quality $M^2$. FIG. 26 is a diagram illustrating $M^2$ obtained in experimental example 2a. A horizontal axis of FIG. 26 indicates the pulse energy (mJ), and a vertical axis indicates $M^2$. In FIG. 26, a result of pulsed laser light at different energy levels output from the laser device 2C having the unstable resonator and the comparative laser device having the stable resonator are illustrated, as in the case of FIGS. 22 to 25. In FIG. 26, a result of $M^2_{pc}$ is also illustrated.

In FIG. 26, when the unstable resonator was used, the value of $M^2$ ($M^2_{pc}$) fluctuated between 5.7 (5.2) and 6.7 (6.1), but did not increase with an increase in energy. On the other hand, a value of $M^2$ when the stable resonator was used was higher than the value of $M^2$ when the unstable resonator was used with an energy larger than 10 mJ, and the value of $M^2$ also increased with the increase in energy. Therefore, in the laser device 2C that can realize a uniform donut pattern, it is possible to realize beam quality $M^2$ that is stable with respect to a magnitude of the energy.

When a peak energy of the pulsed laser light is $P_0$ and a wavelength is $\lambda$, brightness B is expressed by $P_0/(\lambda M^2)^2$. "$M^2$" in a calculation equation of the brightness B is $M^2$ indicating beam quality. As a result, the laser device 2C, which can realize a uniform donut pattern, can realize high brightness.

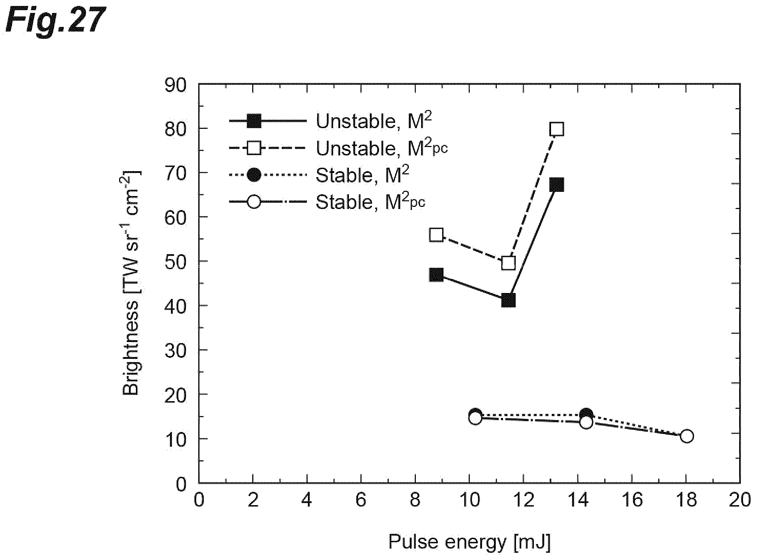

FIG. 27 is a diagram illustrating brightness obtained from the result of experimental example 2a. A horizontal axis in FIG. 27 indicates a pulse energy (mJ), and a vertical axis indicates brightness ($TW \cdot sr^{-1} \cdot cm^{-2}$).

For example, when the energy of the pulsed laser light L2 output from the laser device 2C is about 20 mJ, it is possible to realize a brightness about one-digit higher than that in a case in which a stable resonator is used. This is because, when the stable resonator is used, both the pulse width and $M^2$ increase in the pulsed laser light having an energy of about 20 mJ.

Further, in experimental example 2, effectiveness of donut-shaped pulsed laser light L2 (donut beam) output from the laser device 2C with respect to a laser-induced breakdown was compared with that of a near-Gaussian beam. Specifically, a threshold value of the laser-induced breakdown in the air was measured in each of cases of the donut-shaped pulsed laser light L2 (donut beam) and the near-Gaussian beam. Hereinafter, an experiment regarding the effectiveness with respect to the laser-induced breakdown in experimental example 2 will be referred to as experimental example 2b.

The above near-Gaussian beam was formed using a pulse width tunable laser and an amplifier. A laser described in Reference 1 below was used as the pulse width tunable laser. Any of amplifiers described in References 2 and 3 below was used as the amplifier.

Reference 1: H. H. Lim and T. Taira, "Sub-nanosecond laser induced air-breakdown with giant-pulse duration tuned Nd: YAG ceramic micro-laser by cavity-length control," Opt. Express 25(6), 6320- 6310 (2017).

Reference 2: V. Yahia and T. Taira, "High brightness energetic pulses delivered by compact microchip-MOPA system," Opt. Express 26(7), 8609-8618 (2018).

Reference 3: T. Kawasaki, V. Yahia, and T. Taira, "100 Hz operation in 10 PW/sr·cm2 class Nd:YAG micro-MOPA," Opt. Express 27(14) 19555-19561 (2019).

In the following description, the donut-shaped pulsed laser light L2 is referred to as a donut beam.

The experiment of laser-induced breakdown in experimental example 2b was performed using a method described in Reference 1. Specifically, a linearly polarized beam was used as the donut beam and the near-Gaussian beam. Each of the donut beam and the near-Gaussian beam was focused in the air of a laboratory using a focusing lens, and an air-breakdown was observed. The experiment was performed on seven focusing lenses with different focal lengths in a range of 8 to 62 mm. The air breakdown was confirmed by detecting white spark from a 90°direction with respect to a traveling direction of the beam using a condenser lens and a silicon photodetector (Si-photodetector). A lowpass filter was used to block scattered laser light. The breakdown threshold was defined as a minimum energy when the breakdown was 100% successful with respect to a laser pulse train.

Experimental conditions other than $M^2$ were the same in the case of the donut beam and the case of the near-Gaussian beam. Specifically, since a size of a parallel beam (a collimated beam size) on the focusing lens, wavelength, $M^2$, and pulse width determine a focal fluence and intensity, the size, wavelength, and pulse width of the parallel beam were the same in the case of the donut beam and the case of the near-Gaussian beam. The pulse width and the size of the parallel beam on the focusing lens in a case in which the near-Gaussian beam is used were matched with those in the case in the donut beam through adjustment of the resonator length and using a telescope. The size of the parallel beam on the focusing lens was measured using a camera disposed at the same distance as the focusing lens from the laser device (specifically, the laser device 2C and the laser device that outputs the near-Gaussian beam). In the experiment, a donut beam having $M^2$ of 6 was used and a near-Gaussian beam having $M^2$ of 1.3 was used. When respective focal beam waists of the donut beam and the near-Gaussian beam are $w_d$ and $w_G$ and respective $M^2$ of the donut beam and the near-Gaussian beam are $M^2_d$ and $M^2_G$, a ratio ($w_d/w_G$) thereof is ($M^2_d/M^2_G$). Since $M^2_d$ is 6 and $M^2_G$ is 1.3 as described above, $w_d/w_G$ was 6/1.3 (about 4.6).

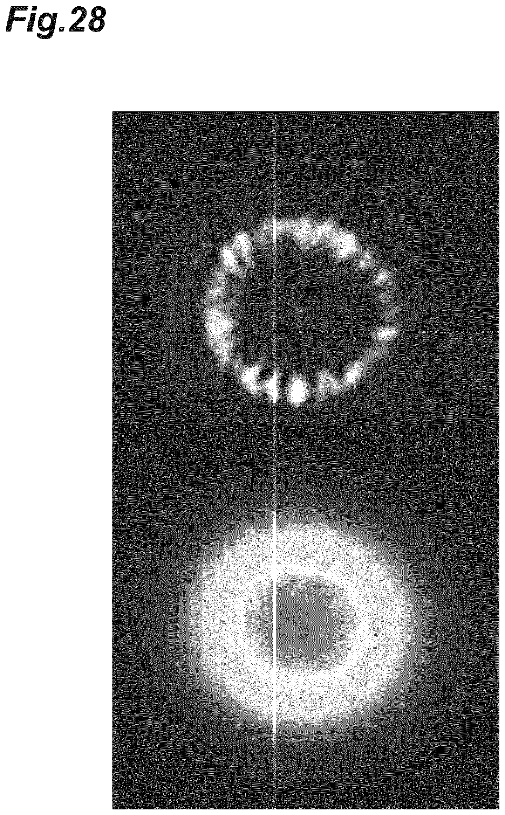

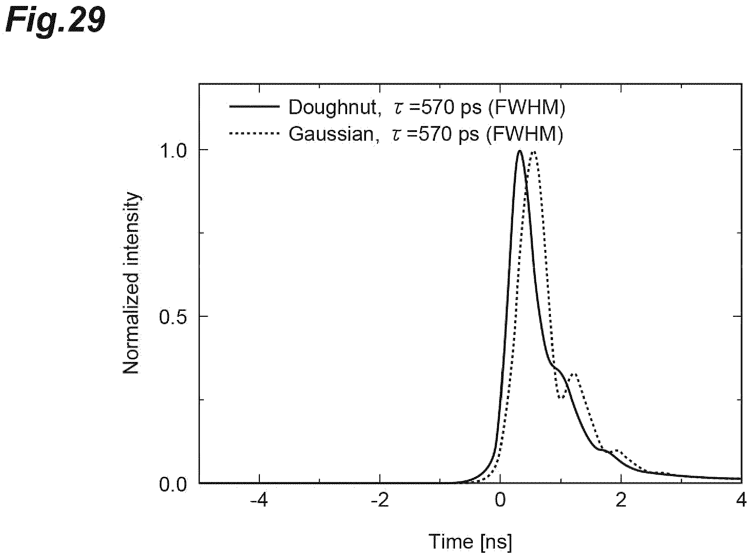

FIG. 28 is a diagram illustrating a result of measuring the beam patterns on the focusing lens of the donut beam and the near-Gaussian beam in experimental example 2b. An upper side of FIG. 28 indicates a beam pattern of the donut beam, and a lower side indicates a beam pattern of the near-Gaussian beam. FIG. 29 is a diagram illustrating pulse waveforms of the donut beam and the near-Gaussian beam in experimental example 2b. A horizontal axis in FIG. 28 is time (ns), and a vertical axis is a normalized intensity. Results indicated by "Doughnut" and "Gaussian" in FIG. 29 mean results of the donut beam and the near-Gaussian beam, respectively.

Each of pulse widths ($\tau$) of the donut beam and the near-Gaussian beam was 570 ps. Each of diameters of the donut beam and the near-Gaussian beam was 7.5 mm.

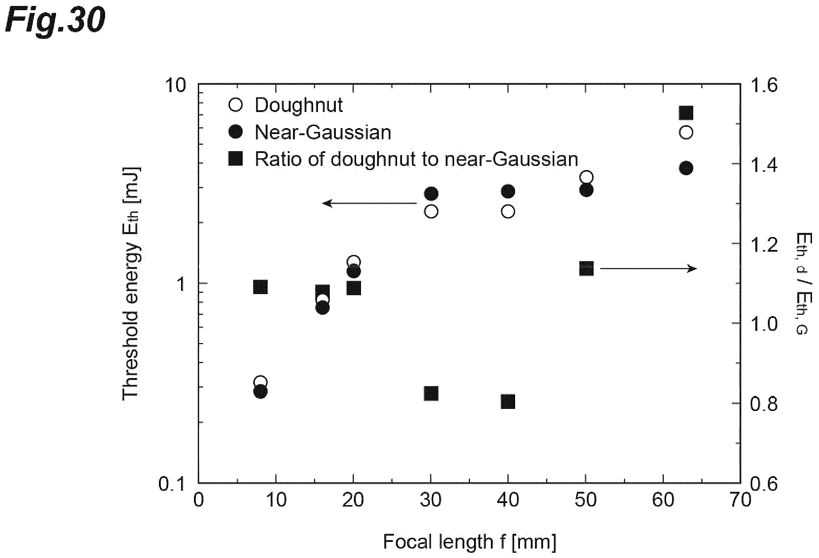

A result of measuring a breakdown threshold energy $E_{th}$ was as illustrated in FIG. 30. The threshold energies $E_{th}$ in the case of the donut beam and the case of the near-Gaussian beam are referred to as $E_{th, d}$ and $E_{th, G}$, respectively. A horizontal axis in FIG. 30 indicates a focal length (mm). A vertical axis on the left side of FIG. 30 indicates the threshold energy $E_{th}$ (mJ), and a vertical axis on the right side indicates a ratio of $E_{th, d}$ to $E_{th, G}$ ($E_{th, d}/E_{th, G}$).

Results indicated by "Doughnut" and "near-Gaussian" in FIG. 30 (that is, results indicated by white circle marks and black-painted circle marks) indicate results of the donut beam and the near-Gaussian beam, respectively. The black-painted square marks in FIG. 30 indicate a ratio ($E_{th, d}/E_{th, G}$).

An average value of the ratio ($E_{th, d}/E_{th, G}$) in a change range of the focal length was 1.08, and a standard deviation was 0.22. That is, the donut beam was 4.6 times different from the near-Gaussian beam in beam size at a focal position (that is, 21 times different in fluence or intensity), and had the same performance as the near-Gaussian beam with respect to the air-breakdown.

It is considered that this is due to an airy disc of the donut beam at the focal position.

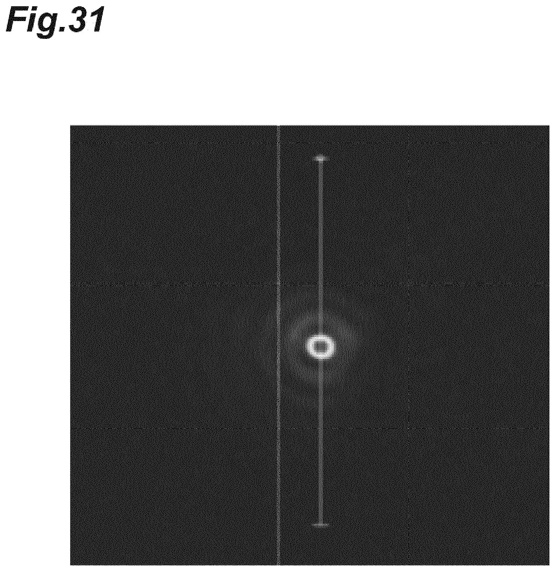

FIG. 31 illustrates a beam pattern of the donut beam at the focal position measured for the calculation of $M^2$. In FIG. 31, an x-axis and a y-axis are set with a center of the beam as an origin. The donut beam shows an airy disc and an airy pattern at the focal position, as illustrated in FIG. 31.

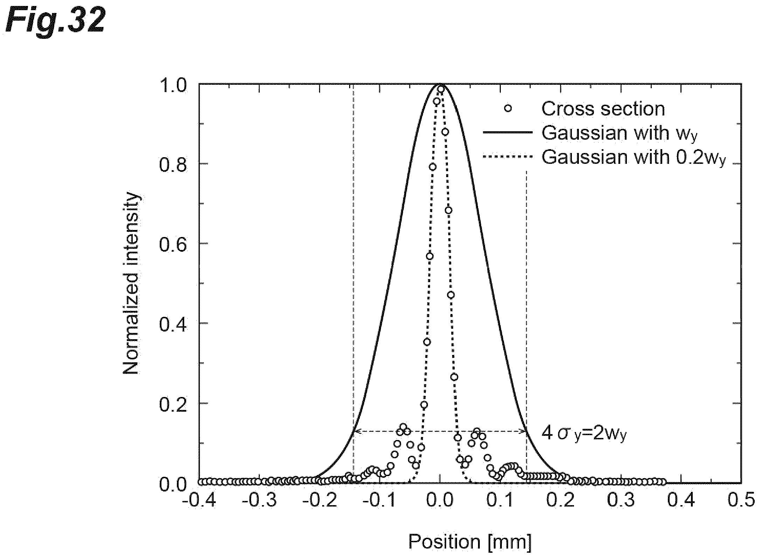

FIG. 32 is a diagram illustrating an intensity distribution in a cross-sectional direction of the donut beam illustrated in FIG. 31, and an intensity of a cross section in a y-axis direction in a central portion is plotted with white circles. A horizontal axis in FIG. 32 indicates a position in the y-axis direction, and a vertical axis indicates a normalized intensity. A second moment beam diameter (2 Wy) of the airy disc and the airy pattern was 0.29 mm. In FIG. 32, a Gaussian distribution having the same beam diameter (0.29 mm) is indicated by a solid line, and a Gaussian distribution having a diameter of 0.2 Wy is indicated by a broken line. On the other hand, a size of the airy disc alone is estimated to be about 0.2 times a total size of 0.29 mm. It is considered that this small effective beam size of about 0.2 times realizes the same performance of the donut beam having $M^2$ of 6 as that of the near-Gaussian beam having $M^2$ of 1.3. Therefore, it can be understood that a laser-induced breakdown in a gas (air) using the donut-shaped pulsed laser light L2 (the donut beam) output from the laser device 2C according to the embodiment of the present invention has the same performance as the near-Gaussian beam having $M^2$ of 1.3.

The present invention is not limited to the above-described embodiments, modification examples, and experimental examples, and various modifications can be made as long as they fall under the scope as defined by the appended claims.

The laser medium and the saturable absorption portion may be bonded. In this case, a length in a bonding direction of the laser medium and the saturable absorption portion (length l in the example of FIG. 16) in the bonded body of the laser medium and the saturable absorption portion may be smaller than 10 mm or may be smaller than a distance between the first reflecting portion and the second reflecting portion.

As illustrated in FIG. 16, when the laser device has a lens output from the unstable resonator on the side opposite to the first reflecting portion when viewed from the second reflecting portion, an example of a focal length of the lens is 30 mm to 200 mm and may be 100 mm to 150 mm.

The first reflecting portion and the second reflecting portion forming the unstable resonator are not limited to the illustrated form. A shape of the support that supports the second reflecting portion is not limited to the illustrated form.

In a case in which the first reflecting portion and the second reflecting portion have a curvature, when a radius of curvature of the first reflecting portion is Rb and a radius of curvature of the second reflecting portion is Ro, the first reflecting portion and the second reflecting portion may be, for example, reflecting portions having Rb and Ro that can be expressed by the following equations in an embodiment.

$$Ro = -2d / (m - 1)$$

$$Rb = 2md / (m - 1)$$

In the above equations for Rb and Ro, m is the magnification m (= b/a) described with reference to FIG. 2, and d is the resonator length d described with reference to FIG. 1.

a at the magnification m corresponds to a size (diameter, or the like) of the second reflecting portion, and b corresponds to a diameter of the output pulsed laser light (donut beam). Therefore, the laser device can be designed to obtain a donut-shaped pulsed laser light having a desired magnification m using the above equations of Rb and Ro.

**Reference Signs List**

1A, 1B, 1C, 1D, 2A, 2B, 2C Laser device (optical oscillator)
10 First reflecting portion
10a First surface (incidence surface)
12 Second reflecting portion
14 Laser medium
14a First end surface

14b Second end surface
16 Q-switched element (saturable absorption portion)
26 Support
26a Surface (curved region)
28 Lens
L1, L4, L5 Excitation light
L2 Pulsed laser light
L3 Injected laser light

**Claims**

1. An optical oscillator, which is an end surface excitation type optical oscillator in which excitation light having a first wavelength is incident from a first reflecting portion, comprising:

    the first reflecting portion (10) configured to transmit light having the first wavelength and reflect light having a second wavelength different from the first wavelength;
    a second reflecting portion (12) configured to form an unstable resonator together with the first reflecting portion (10), be disposed apart from the first reflecting portion (10) in one direction, and reflect light having the second wavelength;
    a laser medium (14) disposed between the first reflecting portion (10) and the second reflecting portion (12) and configured to emit light having the second wavelength due to incidence of light having the first wavelength;
    a saturable absorption portion (16) disposed on a side opposite to the first reflecting portion (10) when viewed from the laser medium (14) in the one direction and having transmittance increasing with absorption of light; and
    a support (26) configured to support the second reflecting portion (12) and transmit light having the second wavelength,
    wherein the first reflecting portion (10) includes an incidence surface on which light having the first wavelength is incident on a side opposite to the laser medium (14),
    a size of the second reflecting portion (12) is smaller than a size of the first reflecting portion (10) when viewed in the one direction,
    at least a part of a surface (26a) of the support (26) on the saturable absorption portion side includes a curved region curved toward the saturable absorption portion side, and
    the second reflecting portion (12) is a dielectric multilayer film provided on a surface of the curved region (26a),
    wherein,
    a reflectance of the second reflecting portion (12) with respect to the light having the second wavelength is 80% or more so that a donut-shaped laser light is output from the optical oscillator,
the laser medium (14) is made of a ceramic or a single crystal,
the saturable absorption portion (16) contains a ceramic or single crystal saturable absorption body,
the laser medium (14) and the saturable absorption portion (16) are bonded to each other, and
the first reflecting portion (10) is provided in the laser medium.

2. An optical oscillator, which is an end surface excitation type optical oscillator in which excitation light having a first wavelength is incident from a first reflecting portion, comprising:

    the first reflecting portion (10) configured to transmit light having the first wavelength and reflect light having a second wavelength different from the first wavelength;
    a second reflecting portion (12) configured to form an unstable resonator together with the first reflecting portion (10), be disposed apart from the first reflecting portion (10) in one direction, and reflect light having the second wavelength;
    a laser medium (14) disposed between the first reflecting portion (10) and the second reflecting portion (12) and configured to emit light having the second wavelength due to incidence of light having the first wavelength; and
    a saturable absorption portion (16) disposed on a side opposite to the first reflecting portion (10) when viewed from the laser medium (14) in the one direction and having transmittance increasing with absorption of light,
    wherein the first reflecting portion (10) includes an incidence surface on which light having the first wavelength is incident on a side opposite to the laser medium (14),
    a size of the second reflecting portion (12) is smaller than a size of the first reflecting portion (10) when viewed in the one direction,
    at least a part of a surface (26a) of the saturable absorption portion (26) on the side opposite to the laser medium (14) includes a curved region curved toward the laser medium side, and
    the second reflecting portion (12) is a dielectric multilayer film provided on a surface of the curved region, wherein a reflectance of the second reflecting portion (12) with respect to the light having the second wavelength is 80% or more so that a donut-shaped laser light is output from the optical oscillator.

3. The optical oscillator according to claim 1, wherein the support (26) is a plano-convex lens.

4. The optical oscillator according to any one of claims 1 to 3, wherein a size of the saturable absorption portion (16) is smaller than a size of the laser medium (14) when viewed in the one direction.

5. The optical oscillator according to claim 4, wherein a laser medium (14) configured to emit light having the second wavelength due to incidence of light having the first wavelength is provided around the saturable absorption portion (16) when viewed in the one direction.

6. The optical oscillator according to any one of claims 1 to 5, wherein the first reflecting portion (10) is a planar mirror, or is curved.

7. The optical oscillator according to claim 6, wherein the first reflecting portion (10) is curved on the side opposite to the laser medium (14).

8. The optical oscillator according to any one of claims 1 to 7, wherein an opening for passing laser light having the second wavelength is formed in at least a part of a region of the first reflecting portion (10) overlapping the second reflecting portion (12) when viewed in the one direction.

9. The optical oscillator according to claim 2,

wherein the laser medium (14) is made of a ceramic or a single crystal,
the saturable absorption portion (16) contains a ceramic or single crystal saturable absorption body,
the laser medium (14) and the saturable absorption portion (16) are bonded to each other, and
the first reflecting portion (10) is provided in the laser medium (14).

10. The optical oscillator according to any preceding claim, wherein a length in a bonding direction of the laser medium (14) and the saturable absorption portion (16) in a bonded body of the laser medium (14) and the saturable absorption portion (16) is smaller than 10 mm.

11. The optical oscillator according to any one of claims 1 to 8,

wherein the laser medium (14) and the saturable absorption portion (16) are bonded to each other, and
a length in a bonding direction of the laser medium and the saturable absorption portion (16) in a bonded body of the laser medium (14) and the saturable absorption portion (16) is smaller than 10 mm or is smaller than a distance between the first reflecting portion (10) and the second reflecting portion (12).

12. The optical oscillator according to any one of claims 1 to 11, wherein a radius of curvature of the second reflecting portion (12) is 10 mm to 100 mm.

13. The optical oscillator according to any one of claims 1 to 12, wherein a diameter of the second reflecting portion (12) is 1 mm to 3 mm.

14. The optical oscillator according to any one of claims 1 to 13, comprising:

a lens (28) disposed on the side opposite to the first reflecting portion (10) when viewed from the second reflecting portion (12), the lens (28) collimating light output from the unstable resonator, wherein a focal length of the lens is 30 mm to 200 mm.

15. The optical oscillator according to any one of claims 1 to 14, wherein a distance between the first reflecting portion (10) and the second reflecting portion (12) is smaller than 15 mm.

**Patentansprüche**

1. Optischer Oszillator, nämlich ein optischer Oszillator vom Typ mit Endflächenanregung, bei dem Anregungslicht mit einer ersten Wellenlänge von einem ersten reflektierenden Abschnitt einfällt, mit:

dem ersten reflektierenden Abschnitt (10), so konfiguriert, dass er Licht der ersten Wellenlänge durchlässt und Licht mit einer zweiten Wellenlänge, die sich von der ersten Wellenlänge unterscheidet, reflektiert,
einem zweiten reflektierenden Abschnitt (12), so konfiguriert, dass er zusammen mit dem ersten reflektierenden Abschnitt (10) einen instabilen Resonator bildet, in einer Richtung vom ersten reflektierenden Abschnitt (10) beabstandet angeordnet ist und Licht der zweiten Wellenlänge reflektiert,
einem Lasermedium (14), das zwischen dem ersten reflektierenden Abschnitt (10) und dem zweiten reflektierenden Abschnitt (12) angeordnet und so konfiguriert ist, dass es aufgrund des Einfalls von Licht der ersten Wellenlänge Licht der zweiten Wellenlänge emittiert,
einem sättigbaren Absorptionsabschnitt (16), der auf einer Seite gegenüber dem ersten reflektierenden Abschnitt (10) angeordnet ist, wenn man vom Lasermedium (14) in der einen Richtung blickt, und dessen Durchlässigkeit mit der Absorption von Licht zunimmt, und
einem Träger (26), konfiguriert um den zweiten reflektierenden Abschnitt (12) zu stützen und Licht der zweiten Wellenlänge zu übertragen, wobei der erste reflektierende Abschnitt (10) eine Einfallsfläche aufweist, auf die Licht der ersten Wellenlänge auf einer dem Lasermedium (14) gegenüberliegenden Seite einfällt, die Größe des zweiten reflektierenden Abschnitts (12) kleiner ist als die Größe des ersten reflektierenden Abschnitts (10), wenn in der einen Richtung betrachtet, die Seite des sättigbaren Absorptionsabschnitts einen gekrümmten Bereich aufweist, der zur Seite des sättigbaren Absorptionsabschnitts hin gekrümmt ist, und der zweite reflektierende Abschnitt (12) eine dielektrische Mehrschichtfolie ist, die auf einer Oberfläche des gekrümmten Bereichs (26a) vorgesehen ist, wobei der Reflexionsgrad des zweiten reflektierenden Abschnitts (12) in Bezug auf das Licht der zweiten Wellenlänge 80 % oder mehr beträgt, so dass aus dem optischen Oszillator ein donutförmiges Laserlicht ausgegeben wird, das Lasermedium (14) aus einer Keramik oder einem Einkristall besteht, der sättigbare Absorptionsabschnitt (16) einen sättigbaren Absorptionskörper aus Keramik oder Einkristall enthält, das Lasermedium (14) und der sättigbare Absorptionsabschnitt (16) miteinander verbunden sind und der erste reflektierende Abschnitt (10) in dem Lasermedium vorgesehen ist.

2. Optischer Oszillator, nämlich ein optischer Oszillator vom Typ mit Endflächenanregung, bei dem Anregungslicht mit einer ersten Wellenlänge von einem ersten reflektierenden Abschnitt einfällt, mit:

   einem ersten reflektierenden Abschnitt (10), so konfiguriert, dass er Licht der ersten Wellenlänge durchlässt und Licht einer zweiten Wellenlänge, die sich von der ersten Wellenlänge unterscheidet, reflektiert,
   einem zweiten reflektierenden Abschnitt (12), so konfiguriert, dass er zusammen mit dem ersten reflektierenden Abschnitt (10) einen instabilen Resonator bildet, in einer Richtung vom ersten reflektierenden Abschnitt (10) beabstandet angeordnet ist und Licht der zweiten Wellenlänge reflektiert,
   einem Lasermedium (14), das zwischen dem ersten reflektierenden Abschnitt (10) und dem zweiten reflektierenden Abschnitt (12) angeordnet und so konfiguriert ist, dass es aufgrund des Einfalls von Licht der ersten Wellenlänge Licht der zweiten Wellenlänge emittiert, und
   einem sättigbaren Absorptionsabschnitt (16), der auf einer Seite gegenüber dem ersten reflektierenden Abschnitt (10) angeordnet ist, wenn man vom Lasermedium (14) in der einen Richtung blickt und der eine mit der Absorption von Licht zunehmende Durchlässigkeit aufweist,
wobei der erste reflektierende Abschnitt (10) eine Einfallsfläche umfasst, auf die Licht der ersten Wellenlänge auf einer dem Lasermedium (14) gegenüberliegenden Seite einfällt,
die Größe des zweiten reflektierenden Abschnitts (12) kleiner ist als die Größe des ersten reflektierenden Abschnitts (10), wenn man in die eine Richtung blickt,
mindestens ein Teil der Oberfläche (26a) des sättigbaren Absorptionsabschnitts (26) auf der dem Lasermedium (14) gegenüberliegenden Seite einen gekrümmten Bereich umfasst, der zur Lasermediumseite hin gekrümmt ist, und
der zweite reflektierende Abschnitt (12) eine dielektrische Mehrschichtfolie ist, die auf einer Oberfläche des gekrümmten Bereichs vorgesehen ist, wobei der Reflexionsgrad des zweiten reflektierenden Abschnitts (12) in Bezug auf das Licht der zweiten Wellenlänge 80 % oder mehr beträgt, so dass ein donutförmiges Laserlicht aus dem optischen Oszillator ausgegeben wird.

3. Optischer Oszillator nach Anspruch 1, wobei der Träger (26) eine plankonvexe Linse ist.

4. Optischer Oszillator nach einem der Ansprüche 1 bis 3,
   wobei die Größe des sättigbaren Absorptionsabschnitts (16) kleiner ist als die Größe des Lasermediums (14), wenn in der einen Richtung betrachtet wird.

5. Optischer Oszillator nach Anspruch 4, wobei um den sättigbaren Absorptionsabschnitt (16) herum, wenn man in die eine Richtung blickt, ein Lasermedium (14) vorgesehen ist, so konfiguriert, dass es aufgrund des Einfalls von Licht der ersten Wellenlänge Licht der zweiten Wellenlänge emittiert.

6. Optischer Oszillator nach einem der Ansprüche 1 bis 5,
   wobei der erste reflektierende Abschnitt (10) ein planarer Spiegel ist oder gekrümmt ist.

7. Optischer Oszillator nach Anspruch 6, wobei der erste reflektierende Abschnitt (10) auf der dem Lasermedium (14) gegenüberliegenden Seite gekrümmt ist.

8. Optischer Oszillator nach einem der Ansprüche 1 bis 7,
   wobei in mindestens einem Teil eines Bereichs des ersten reflektierenden Abschnitts (10), der den zweiten reflektierenden Abschnitt (12) überlappt, wenn man in die einen Richtung blickt, eine Öffnung zum Durchlassen von LaserLicht der zweiten Wellenlänge ausgebildet ist.

9. Optischer Oszillator nach Anspruch 2, wobei

das Lasermedium (14) aus einer Keramik oder einem Einkristall besteht,
der sättigbare Absorptionsabschnitt (16) einen sättigbaren Absorptionskörper aus Keramik oder Einkristall enthält,
das Lasermedium (14) und der sättigbare Absorptionsabschnitt (16) miteinander verbunden sind und
der erste reflektierende Abschnitt (10) im Lasermedium (14) vorgesehen ist.

10. Optischer Oszillator nach einem der vorstehenden Ansprüche, wobei
die Länge in der Verbindungsrichtung des Lasermediums (14) und des sättigbaren Absorptionsabschnitts (16) im Verbundkörper des Lasermediums (14) und des sättigbaren Absorptionsabschnitts (16) kleiner als 10 mm ist.

11. Optischer Oszillator nach einem der Ansprüche 1 bis 8,

wobei das Lasermedium (14) und der sättigbare Absorptionsabschnitt (16) miteinander verbunden sind und
die Länge in einer Verbindungsrichtung des Lasermediums und des sättigbaren Absorptionsabschnitts (16) im Verbundkörper des Lasermediums (14) und des sättigbaren Absorptionsabschnitts (16) kleiner als 10 mm oder kleiner als der Abstand zwischen dem ersten reflektierenden Abschnitt (10) und dem zweiten reflektierenden Abschnitt (12) ist.

12. Optischer Oszillator nach einem der Ansprüche 1 bis 11, wobei der Krümmungsradius des zweiten reflektierenden Abschnitts (12) 10 mm bis 100 mm beträgt.

13. Optischer Oszillator nach einem der Ansprüche 1 bis 12, wobei der Durchmesser des zweiten reflektierenden Abschnitts (12) 1 mm bis 3 mm beträgt.

14. Optischer Oszillator nach einem der Ansprüche 1 bis 13, umfassend:

eine Linse (28), die vom zweiten reflektierenden Abschnitt (12) aus gesehen auf der dem ersten reflektierenden Abschnitt (10) gegenüberliegenden Seite angeordnet ist, wobei die Linse (28) das vom instabilen Resonator ausgegebene Licht kollimiert,
wobei die Brennweite der Linse 30 mm bis 200 mm beträgt.

15. Optischer Oszillator nach einem der Ansprüche 1 bis 14, wobei der Abstand zwischen dem ersten reflektierenden Abschnitt (10) und dem zweiten reflektierenden Abschnitt (12) kleiner als 15 mm ist.

**Revendications**

1. Un oscillateur optique, qui est un oscillateur optique du type à excitation par surface d'extrémité, dans lequel de la lumière d'excitation ayant une première longueur d'onde est incidente à partir d'une première partie réfléchissante, comprenant :

la première partie (10) réfléchissante configurée pour transmettre de la lumière ayant la première longueur d'onde et réfléchir de la lumière ayant une deuxième longueur d'onde différente de la première longueur d'onde ;
une deuxième partie (12) réfléchissante configurée pour former un résonnateur instable ensemble avec la première partie (10) réfléchissante, disposée en étant séparée de la première partie (10) réfléchissante dans une direction et pour réfléchir de la lumière ayant la deuxième longueur d'onde ;
un milieu (14) laser disposé entre la première partie (10) réfléchissante et la deuxième partie (12) réfléchissante et configuré pour émettre de la lumière ayant la deuxième longueur d'onde en raison d'une incidence de lumière ayant la première longueur d'onde ;
une partie (16) d'absorption saturable disposée d'un côté opposé à la première partie (10) réfléchissante tel que vu à partir du milieu (14) laser dans la une direction et ayant une transmittance augmentant avec l'absorption de lumière ; et
un support (26) configuré pour supporter la deuxième partie (12) réfléchissante et transmettre de la lumière ayant la deuxième longueur d'onde,
dans lequel la première partie (10) réfléchissante comprend une surface d'incidence, sur laquelle de la lumière ayant la première longueur d'onde est incidente d'un côté opposé au milieu (14) laser,
une dimension de la deuxième partie (12) réfléchissante est plus petite qu'une dimension de la première partie (10) réfléchissante tel que vu dans la une direction,
au moins une partie d'une surface (26a) du support (26) du côté de la partie d'absorption saturable comprend une région incurvée vers le côté de la portion d'absorption saturable, et la deuxième partie (12) réfléchissante est un film diélectrique stratifié prévu sur une surface de la région (26a) incurvée,

dans lequel

un pouvoir réfléchissant de la deuxième partie (12) réfléchissante par rapport à la lumière ayant la deuxième longueur d'onde est égal ou supérieur à 80 % de sorte que de la lumière laser de forme torique sort de l'oscillateur optique, le milieu (14) laser est fait d'une céramique ou d'un monocristal, la partie (16) d'absorption saturable contient une céramique ou un corps d'absorption saturable en monocristal, le milieu (14) laser et la partie (16) d'absorption saturable sont liés l'un à l'autre, et la première partie (10) réfléchissante est prévue dans le milieu laser.

2. Un oscillateur optique, qui est un oscillateur optique du type à excitation par surface d'extrémité, dans lequel de la lumière d'excitation ayant une première longueur d'onde est incidente à partir d'une première partie réfléchissante,

comprenant :

la première partie (10) réfléchissante configurée pour transmettre de la lumière ayant la première longueur d'onde et réfléchir de la lumière ayant une deuxième longueur d'onde différente de la première longueur d'onde ;
une deuxième partie (12) réfléchissante configurée pour former un résonnateur instable ensemble avec la première partie (10) réfléchissante, disposée en étant séparée de la première partie (10) réfléchissante dans une direction et pour réfléchir de la lumière ayant la deuxième longueur d'onde ;
un milieu (14) laser disposé entre la première partie (10) réfléchissante et la deuxième partie (12) réfléchissante et configuré pour émettre de la lumière ayant la deuxième longueur d'onde en raison d'une incidence de lumière ayant la première longueur d'onde ; et
une partie (16) d'absorption saturable disposée d'un côté opposé à la première partie (10) réfléchissante tel que vu à partir du milieu (14) laser dans la une direction et ayant une transmittance augmentant avec l'absorption de lumière,

dans lequel la première partie (10) réfléchissante comprend une surface d'incidence, sur laquelle de la lumière ayant la première longueur d'onde est incidente d'un côté opposé au milieu (14) laser,
une dimension de la deuxième partie (12) réfléchissante est plus petite qu'une dimension de la première partie (10) réfléchissante tel que vu dans la une direction,
au moins une partie d'une surface (26a) de la partie (26) d'absorption saturable du côté opposé au milieu (14) laser comprend une région incurvée vers le côté du milieu laser,
la deuxième partie (12) réfléchissante est un milieu diélectrique stratifié prévu sur une surface de la région incurvée, dans lequel un pouvoir réfléchissant de la deuxième partie (12) réfléchissante par rapport à la lumière ayant la deuxième longueur d'onde est égal ou supérieur à 80 % de sorte que de la lumière laser de forme torique sort de l'oscillateur optique.

3. L'oscillateur optique suivant la revendication 1, dans lequel le support (26) est une lentille plan convexe.

4. L'oscillateur optique suivant l'une quelconque des revendications 1 à 3, dans lequel une dimension de la partie (16) d'absorption saturable est plus petite qu'une dimension du milieu (14) laser tel que vu dans la une direction.

5. L'oscillateur optique suivant la revendication 4, dans lequel un milieu (14) laser, configuré pour émettre de la lumière ayant la deuxième longueur d'onde en raison de l'incidence de lumière ayant la première longueur d'onde, est prévu autour de la partie (16) d'absorption saturable tel que vu dans la une direction.

6. L'oscillateur optique suivant l'une quelconque des revendications 1 à 5, dans lequel la première partie (10) réfléchissante est un miroir plan ou est incurvée.

7. L'oscillateur optique suivant la revendication 6, dans lequel la première partie (10) réfléchissante est incurvée du côté opposé au milieu (14) laser.

8. L'oscillateur optique suivant l'une quelconque des revendications 1 à 7, dans lequel une ouverture de passage de la lumière laser ayant la deuxième longueur d'onde est formée dans au moins une partie d'une région de la première partie (10) réfléchissante chevauchant la deuxième partie (12) réfléchissante tel que vu dans la une direction.

9. L'oscillateur optique suivant la revendication 2,

dans lequel le milieu (14) laser est en céramique ou en monocristal,
la partie (16) d'absorption saturable contient une céramique ou un corps d'absorption saturable en monocristal,
le milieu (14) laser et la partie (16) d'absorption saturable sont liés l'un à l'autre, et

la première partie (10) réfléchissante est prévue dans le milieu (14) laser.

10. L'oscillateur optique suivant l'une quelconque des revendications précédentes, dans lequel une longueur dans une direction de liaison du milieu (14) laser et de la partie (16) d'absorption saturable dans un corps lié du milieu (14) laser et de la partie (16) d'absorption saturable est plus petite que 10 mm.

11. L'oscillateur optique suivant l'une quelconque des revendications 1 à 8,

dans lequel le milieu (14) laser et la partie (16) d'absorption saturable sont liés l'un à l'autre, et une longueur dans une direction de liaison du milieu laser et de la partie (16) d'absorption saturable dans un corps lié du milieu (14) laser et de la partie (16) d'absorption saturable est plus petite que 10 mm ou est plus petite qu'une distance entre la première partie (10) réfléchissante et la deuxième partie (12) réfléchissante.

12. L'oscillateur optique suivant l'une quelconque des revendications 1 à 11, dans lequel un rayon de courbure de la deuxième partie (12) réfléchissante va de 10 mm à 100 mm.

13. L'oscillateur optique suivant l'une quelconque des revendications 1 à 12, dans lequel un diamètre de la deuxième partie (12) réfléchissante va de 1 mm à 3 mm.

14. L'oscillateur optique suivant l'une quelconque des revendications 1 à 13, comprenant :

une lentille (28) disposée du côté opposé à la première partie (10) réfléchissante tel que vu à partir de la deuxième partie (12) réfléchissante, la lentille (28) collimatant de la lumière sortie du résonnateur instable, dans lequel une distance focale de la lentille va de 30 mm à 200 mm.

15. L'oscillateur optique suivant l'une quelconque des revendications 1 à 14, dans lequel une distance entre la première partie (10) réfléchissante et la deuxième partie (12) réfléchissante est plus petite que 15 mm.

*Fig.1*

1A

L2

Z

12

16 16b

14 16a 14b

10b d

10 16a

10a 14a

L1

18
18A 18B 18C

L1

# Fig.2

EP 3 852 209 B1

**Fig.3**

Fig.4

EP 3 852 209 B1

Fig.5

EP 3 852 209 B1

EP 3 852 209 B1

**Fig.6**

*Fig.7*

EP 3 852 209 B1

**Fig.8**

**Fig.9**

*Fig.10*

EP 3 852 209 B1

*Fig.11*

# Fig.12

EP 3 852 209 B1

Fig.13

*Fig.14*

L4

# Fig.15

Fig.16

Fig.17

# Fig.18

EP 3 852 209 B1

## Fig.19

EP 3 852 209 B1

Fig.20

EP 3 852 209 B1

*Fig.21*

Fig.22

Fig.23

Fig.24

EP 3 852 209 B1

Fig.25

*Fig.26*

## Fig.27

EP 3 852 209 B1

*Fig.28*

*Fig.29*

Doughnut, $\tau$ =570 ps (FWHM)

Gaussian, $\tau$ =570 ps (FWHM)

Normalized intensity

Time [ns]

Fig.30

EP 3 852 209 B1

*Fig.31*

EP 3 852 209 B1

# Fig.32

## EP 3 852 209 B1

**REFERENCES CITED IN THE DESCRIPTION**

**Patent documents cited in the description**

- US 4903271 A
- JP 2014192166 A
- US 2016326667 A1

**Non-patent literature cited in the description**

- **TAKUNORI TAIRA**. High Power Laser Material with Micro Domain Control. *Applied Physics*, 2016, vol. 85 (10), 863-869
- **MASAKI TSUNEKANN**. High Peak Power, Passively Q-switched Microlaser for Ignition Engins. *IEEE JOURNAL OF QUANTUM ELCTRONICS*, February 2010, vol. 46 (2), 277-284
- **MASAKI TSUNEKANN**. High Peak Power, Passively Q-switched Yb:YAG/Cr:YAG Micro-Lasers. *IEEE JOURNAL OF QUANTUM ELCTRONICS*, May 2013, vol. 49 (5), 454-461
- **H. H. LIM** ; **T. TAIRA**. Sub-nanosecond laser induced air-breakdown with giant-pulse duration tuned Nd: YAG ceramic micro-laser by cavity-length control. *Opt. Express*, 2017, vol. 25 (6), 6320-6310
- **V. YAHIA** ; **T. TAIRA**. High brightness energetic pulses delivered by compact microchip-MOPA system. *Opt. Express*, 2018, vol. 26 (7), 8609-8618
- **T. KAWASAKI** ; **V. YAHIA** ; **T. TAIRA**. 100 Hz operation in 10 PW/sr·cm2 class Nd:YAG micro-MOPA. *Opt. Express*, 2019, vol. 27 (14), 19555-19561